# EUROPEAN PATENT APPLICATION

(11) **EP 4 458 937 A1**
(43) Date of publication of application: **06.11.2024**
(21) Application number: 22916070.0
(22) Date of filing: 27.12.2022
(51) Int. Cl.: C12G 3/04, A23L 2/00, A23L 2/60, A23L 2/56

(54) **BEVERAGE CONTAINING STEVIOL GLYCOSIDE**

(30) Priority: 28.12.2021 JP 2021214516
(71) Applicant: Suntory Holdings Limited, Osaka-shi, Osaka 530-8203 (JP)
(72) Inventor: FUJIWARA, Yasuko, Kawasaki-shi, Kanagawa 211-0067 (JP)
(74) Representative: Mewburn Ellis LLP
(86) International application number: PCT/JP2022/048075
(87) International publication number: WO 2023/127847

(57) **Abstract**

Development of a new beverage having a favorable flavor effect is expected. The present invention provides a beverage comprising a steviol glycoside and syringaldehyde, sinapyl aldehyde, or the combination thereof, wherein the content of syringaldehyde, sinapyl aldehyde, or the combination thereof is 0.001 mg/L to 100 mg/L.

## Description

### Technical Field

The present invention relates to a beverage containing a steviol glycoside and syringaldehyde, sinapaldehyde, or a combination thereof, a method of producing the beverage, a concentrate for providing the beverage, and the like.

### Background Art

In recent years, beverages with various tastes (flavors) have been sold as packaged beverages without alcohol or with a wide range of alcoholic strength in association with diversification of consumers' preferences in various parts of the world mainly including Japan. Examples of such alcoholic beverages include shochu-based beverages, cocktails, and highballs obtained by adding fruit juices, flavorings, and the like to liquors such as shochu, vodka, spirits, and whiskey. Further, in recent years, for such liquors, products with reduced calories and products with an improved flavor have been preferred and actively developed. In addition, attempts have been made to bring about various flavor effects by adding various components.

For example, JP 2017-176164 A (Patent Document 1) discloses that gallic acid and/or sinapaldehyde and naringin are contained in a carbonic acid gas-containing packaged beverage to provide a beverage which has reduced bitterness and astringency of a woody component originating from a woody container such as a barrel or wood while maintaining a full and deep taste characteristic of the woody component, and which thus provides a refreshing and sharp taste when drunk.

JP 2019-528732 T (Patent Document 2) discloses a ready-to-drink beverage containing a sweetener composition containing a non-nutritive sweetener and a compound such as furfural. WO 2017/073704 (Patent Document 3) discloses an alcohol-taste beverage containing at least one selected from the group consisting of sinapaldehyde, coniferyl aldehyde, and syringaldehyde. The alcohol-taste beverage is said to have an enhanced taste thickness typical of brown spirits.

### Citation List

### Patent Document

Patent Document 1: JP 2017-176164 A
Patent Document 2: JP 2019-528732 T

### Summary of Invention

### Technical Problem

Under the circumstances as described above, development of a novel beverage having a preferable flavor effect is awaited.

### Solution to Problem

The present inventors have found that a beverage having a preferable flavor effect is produced by incorporating a steviol glycoside and a predetermined amount of syringaldehyde, sinapaldehyde or a combination thereof into a beverage. The present invention is based on such a finding.

The present invention provides a beverage described below and a concentrate (for example, a concentrated liquid) for preparing the beverage.
[1] A beverage containing:
   a steviol glycoside; and
   syringaldehyde, sinapaldehyde, or a combination thereof,
   wherein a content of the syringaldehyde, sinapaldehyde, or combination thereof is from 0.001 mg/L to 100 mg/L.
[2] The beverage according to [1], wherein
   the steviol glycoside includes one or more steviol glycosides selected from the group consisting of stevioside, rebaudioside A, rebaudioside B, rebaudioside C, rebaudioside D, rebaudioside F, rebaudioside M, dulcoside A, rubusoside, and steviolbioside, and
   a content of the one or more steviol glycosides is 5 mg/L or more relative to the beverage.
[3] The beverage according to [1] or [2], wherein the content of the syringaldehyde is from 0.007 mg/L to 100 mg/L.
[4] The beverage according to any one of [1] to [3], wherein the content of the sinapaldehyde is from 0.007 mg/L to 100 mg/L.
[5] The beverage according to any one of [2] to [4], wherein the content of the one or more steviol glycosides is from 0.5 to 150000 times the content of the syringaldehyde, sinapaldehyde, or combination thereof in weight ratio.
[6] The beverage according to any one of [2] to [5], wherein the one or more steviol glycosides include one or more selected from the group consisting of rebaudioside A, rebaudioside D, and rebaudioside M.
[7] The beverage according to any one of [1] to [6], wherein the beverage has an alcoholic strength of from 0.5 to 40 v/v%.
[8] The beverage according to any one of [1] to [7], wherein the beverage is a sparkling beverage.
[9] The beverage according to any one of [1] to [8], wherein the beverage has a pH of from 2.0 to 4.6.
[10] The beverage according to any one of [1] to [9], wherein the beverage has a sweetness intensity of from 0.1 to 20.
[11] The beverage according to any one of [1] to [10], further containing a sour substance,
   wherein the beverage has an acidity of from 0.01 to 5.0 w/v%.
[12] The beverage according to any one of [1] to [11], wherein the beverage has a sweetness intensity/acidity ratio of from 1 to 700.
[13] The beverage according to any one of [1] to [12], further containing a low-intensity sweetener or a high-intensity sweetener other than the steviol glycoside.
[14] The beverage according to any one of [1] to [13], containing a brown spirit.
[15] The beverage according to any one of [1] to [14], wherein the beverage has an energy of 100 kcal/100 mL or less.
[16] The beverage according to any one of [1] to [15], wherein the beverage is a citrus fruit-flavored, pome fruit-flavored, stone fruit-flavored, berry-flavored, nut-flavored, tropical and subtropical fruit-flavored, fruity vegetable-flavored, root vegetable-flavored, leaf and stem vegetable-flavored, fruit vegetable-flavored, savory herb and garnish-flavored, energy drink-flavored, coffee-flavored, tea-flavored, cocoa-flavored, cola-flavored, dessert-flavored, or lactic drink-flavored beverage.
[17] The beverage according to any one of [1] to [16], wherein the beverage is a packaged beverage.
[18] A 1.2 to 10-fold concentrate for providing the beverage according to any one of [1] to [17].

### Advantageous Effects of Invention

According to an embodiment of the present invention, a non-alcoholic beverage or alcoholic beverage with a reduced residual sweetness is provided. According to another embodiment of the present invention, there is provided a non-alcoholic beverage or alcoholic beverage having a reduced residual sweetness while astringency remaining as an aftertaste on the tongue is reduced. According to another embodiment of the present invention, there is provided a non-alcoholic beverage or alcoholic beverage which is free from residual sweetness and an astringent aftertaste, has a low calorie, and exhibits a fresh and sharp taste.

### Description of Embodiments

The present invention will be described in detail below. The following embodiments are examples for explaining the present invention and are not intended to limit the present invention to these embodiments only. The present invention can be implemented in various embodiments as long as the gist of the present invention is not deviated.

All literatures, patent application publications, patent publications, and other patent documents cited in the present specification are incorporated herein by reference. In addition, the present specification encompasses the contents described in the specification and drawings of Japanese Patent Application (JP 2021-214516) filed on December 28, 2021, which serves as a basis for claiming priority of the present application.

### 1. Beverage Containing Steviol Glycoside

In an aspect, the present invention provides the following beverage (non-alcoholic beverage or alcoholic beverage) (hereinafter also referred to as "the beverage of the present invention (or the non-alcoholic beverage or alcoholic beverage of the present invention)").

The beverage according to an embodiment of the present invention is a beverage containing: a steviol glycoside; and syringaldehyde, sinapaldehyde, or a combination thereof, in which a content of the syringaldehyde, sinapaldehyde, or combination thereof is from 0.001 mg/L to 100 mg/L. The beverage according to an embodiment of the present invention may be a non-alcoholic beverage or may be an alcoholic beverage.

The non-alcoholic or alcoholic beverage according to a preferred embodiment of the present invention has a reduced residual sweetness. In addition, the non-alcoholic or alcoholic beverage according to a further preferred embodiment of the present invention has a reduced astringent aftertaste derived from syringaldehyde, sinapaldehyde or a combination thereof, and a reduced residual sweetness. The non-alcoholic or alcoholic beverage according to a still more preferred embodiment of the present invention has a low calorie, is free from residual sweetness and an astringent aftertaste, and exhibits a fresh and sharp taste.

### Steviol Glycoside

The steviol glycoside is a sweet substance having, as a skeleton, steviol which is one of diterpenoids contained in leaves of Stevia rebaudiana belonging to the Asteraceae family. Many steviol glycosides have a sweetness that is several tens to several hundreds of times that of sugar, and thus are used in the food and drink industry as calorie-free sweeteners.

A steviol glycoside is used in the present invention. The steviol glycoside is not particularly limited, and examples thereof include stevioside, rebaudioside A (hereinafter rebaudioside is sometimes abbreviated as Reb), rebaudioside B, rebaudioside C, rebaudioside D, rebaudioside E, rebaudioside F, rebaudioside I, rebaudioside J, rebaudioside K, rebaudioside L, rebaudioside M, rebaudioside N, rebaudioside O, rebaudioside Q, rebaudioside R, dulcoside A, dulcoside C, steviolmonoside, steviolbioside, and rubusoside. In an embodiment of the present invention, one or more steviol glycosides selected from the group consisting of stevioside, rebaudioside A, rebaudioside B, rebaudioside C, rebaudioside D, rebaudioside E, rebaudioside F, rebaudioside I, rebaudioside J, rebaudioside K, rebaudioside L, rebaudioside M, rebaudioside N, rebaudioside O, rebaudioside Q, rebaudioside R, dulcoside A, dulcoside C, steviolmonoside, steviolbioside, and rubusoside are used. The non-alcoholic beverage or alcoholic beverage according to a preferred embodiment of the present invention contains one or more steviol glycosides selected from the group consisting of rebaudioside A, rebaudioside B, rebaudioside C, rebaudioside D, rebaudioside E, rebaudioside F, rebaudioside M, rebaudioside N, and rebaudioside O. The non-alcoholic beverage or alcoholic beverage according to another preferred embodiment of the present invention contains a steviol glycoside, and the steviol glycoside includes one or more steviol glycosides selected from the group consisting of stevioside, rebaudioside A, rebaudioside B, rebaudioside C, rebaudioside D, rebaudioside F, rebaudioside M, dulcoside A, rubusoside, and steviolbioside. The non-alcoholic beverage or alcoholic beverage according to a further preferred embodiment of the present invention contains one or more steviol glycosides selected from the group consisting of rebaudioside A, rebaudioside D, and rebaudioside M. The steviol glycoside used in the present invention may be directly extracted from stevia or may be produced by chemically or biochemically adding one or more sugar molecules such as glucose to a compound having another structure and contained in an stevia extract.

A content of the one or more steviol glycosides selected from the group consisting of stevioside, rebaudioside A, rebaudioside B, rebaudioside C, rebaudioside D, rebaudioside F, rebaudioside M, dulcoside A, rubusoside, and steviolbioside in the non-alcoholic beverage or alcoholic beverage according to an embodiment of the present invention is not particularly limited, and is preferably 5 mg/L or more relative to the non-alcoholic beverage or alcoholic beverage. When two or more steviol glycosides are contained, the content of the one or more steviol glycosides means a total content of the steviol glycosides. In addition, the non-alcoholic beverage or alcoholic beverage according to the present embodiment may contain steviol glycosides other than the 10 kinds of steviol glycosides listed herein. In an embodiment of the present invention, the content of the one or more steviol glycosides (one or more selected from the 10 kinds of steviol glycosides listed herein) in the non-alcoholic beverage or alcoholic beverage may be from 5 mg/L to 900 mg/L, from 5 mg/L to 800 mg/L, from 5 mg/L to 700 mg/L, from 5 mg/L to 600 mg/L, from 5 mg/L to 500 mg/L, from 5 mg/L to 400 mg/L, from 5 mg/L to 300 mg/L, from 5 mg/L to 200 mg/L, from 5 mg/L to 100 mg/L, from 10 mg/L to 900 mg/L, from 10 mg/L to 800 mg/L, from 10 mg/L to 700 mg/L, from 10 mg/L to 600 mg/L, from 10 mg/L to 550 mg/L, from 10 mg/L to 500 mg/L, from 10 mg/L to 400 mg/L, from 10 mg/L to 300 mg/L, from 10 mg/L to 200 mg/L, from 10 mg/L to 100 mg/L, from 20 mg/L to 900 mg/L, from 20 mg/L to 800 mg/L, from 20 mg/L to 700 mg/L, from 20 mg/L to 600 mg/L, from 20 mg/L to 550 mg/L, from 20 mg/L to 500 mg/L, from 20 mg/L to 400 mg/L, from 20 mg/L to 300 mg/L, from 20 mg/L to 200 mg/L, from 20 mg/L to 100 mg/L, from 30 mg/L to 900 mg/L, from 30 mg/L to 800 mg/L, from 30 mg/L to 700 mg/L, from 30 mg/L to 600 mg/L, from 30 mg/L to 550 mg/L, from 30 mg/L to 500 mg/L, from 30 mg/L to 400 mg/L, from 30 mg/L to 300 mg/L, from 30 mg/L to 200 mg/L, from 30 mg/L to 100 mg/L, from 50 mg/L to 900 mg/L, from 50 mg/L to 800 mg/L, from 50 mg/L to 700 mg/L, from 50 mg/L to 600 mg/L, from 50 mg/L to 500 mg/L, from 50 mg/L to 400 mg/L, from 50 mg/L to 300 mg/L, from 50 mg/L to 200 mg/L, from 50 mg/L to 100 mg/L, from 100 mg/L to 900 mg/L, from 100 mg/L to 800 mg/L, from 100 mg/L to 700 mg/L, from 100 mg/L to 600 mg/L, from 100 mg/L to 500 mg/L, from 100 mg/L to 400 mg/L, from 100 mg/L to 300 mg/L, from 100 mg/L to 200 mg/L, from 200 mg/L to 900 mg/L, from 200 mg/L to 800 mg/L, from 200 mg/L to 700 mg/L, from 200 mg/L to 600 mg/L, from 200 mg/L to 500 mg/L, from 200 mg/L to 400 mg/L, from 200 mg/L to 300 mg/L, from 300 mg/L to 900 mg/L, from 300 mg/L to 800 mg/L, from 300 mg/L to 700 mg/L, from 300 mg/L to 600 mg/L, from 300 mg/L to 500 mg/L, or from 300 mg/L to 400 mg/L. In a preferred embodiment of the present invention, the content of the one or more steviol glycosides in the non-alcoholic beverage or alcoholic beverage may be from 20 mg/L to 600 mg/L, from 30 mg/L to 550 mg/L, or from 100 mg/L to 500 mg/L. The content of the steviol glycoside in the beverage may be calculated from amounts of raw materials added, or may be measured using a known analysis method such as liquid chromatography, and is preferably measured by an HPLC method in accordance with JECFA (2010).

In an embodiment of the present invention, the steviol glycoside includes one or more selected from the group consisting of rebaudioside A, rebaudioside D, and rebaudioside M. In another embodiment of the present invention, the one or more steviol glycosides are one or more selected from the group consisting of rebaudioside A, rebaudioside D, and rebaudioside M. In an embodiment of the present invention, the steviol glycoside may consist essentially of one or more steviol glycosides selected from the group consisting of stevioside, rebaudioside A, rebaudioside B, rebaudioside C, rebaudioside D, rebaudioside F, rebaudioside M, dulcoside A, rubusoside, and steviolbioside. Preferably, the steviol glycoside consists essentially of one or more steviol glycosides selected from the group consisting of rebaudioside A, rebaudioside D, and rebaudioside M. As used herein, the phrase "consisting essentially of' means that the steviol glycosides used in the present invention may include a minor amount of a steviol glycoside other than those described herein. For example, when the steviol glycoside consists essentially of one or more steviol glycosides selected from the group consisting of rebaudioside A, rebaudioside D, and rebaudioside M, it means that rebaudioside A, rebaudioside D, and/or rebaudioside M accounts for preferably 85 wt.% or more, more preferably 90 wt.% or more, and even more preferably 95 wt.% or more of the steviol glycosides. For example, it can be understood that a commercially available rebaudioside A preparation having a purity of 90 wt.% or more contains steviol glycosides whose 90 wt.% or more is composed of rebaudioside A.

In an embodiment of the present invention, the non-alcoholic beverage or alcoholic beverage contains rebaudioside A, and a content of rebaudioside A may be from 5 mg/L to 900 mg/L, from 5 mg/L to 800 mg/L, from 5 mg/L to 700 mg/L, from 5 mg/L to 600 mg/L, from 5 mg/L to 500 mg/L, from 5 mg/L to 400 mg/L, from 5 mg/L to 300 mg/L, from 5 mg/L to 200 mg/L, from 5 mg/L to 100 mg/L, from 10 mg/L to 900 mg/L, from 10 mg/L to 800 mg/L, from 10 mg/L to 700 mg/L, from 10 mg/L to 600 mg/L, from 10 mg/L to 550 mg/L, from 10 mg/L to 500 mg/L, from 10 mg/L to 400 mg/L, from 10 mg/L to 300 mg/L, from 10 mg/L to 200 mg/L, from 10 mg/L to 100 mg/L, from 20 mg/L to 900 mg/L, from 20 mg/L to 800 mg/L, from 20 mg/L to 700 mg/L, from 20 mg/L to 600 mg/L, from 20 mg/L to 550 mg/L, from 20 mg/L to 500 mg/L, from 20 mg/L to 400 mg/L, from 20 mg/L to 300 mg/L, from 20 mg/L to 200 mg/L, from 20 mg/L to 100 mg/L, from 30 mg/L to 900 mg/L, from 30 mg/L to 800 mg/L, from 30 mg/L to 700 mg/L, from 30 mg/L to 600 mg/L, from 30 mg/L to 550 mg/L, from 30 mg/L to 500 mg/L, from 30 mg/L to 400 mg/L, from 30 mg/L to 300 mg/L, from 30 mg/L to 200 mg/L, from 30 mg/L to 100 mg/L, from 50 mg/L to 900 mg/L, from 50 mg/L to 800 mg/L, from 50 mg/L to 700 mg/L, from 50 mg/L to 600 mg/L, from 50 mg/L to 500 mg/L, from 50 mg/L to 400 mg/L, from 50 mg/L to 300 mg/L, from 50 mg/L to 200 mg/L, from 50 mg/L to 100 mg/L, from 100 mg/L to 900 mg/L, from 100 mg/L to 800 mg/L, from 100 mg/L to 700 mg/L, from 100 mg/L to 600 mg/L, from 100 mg/L to 500 mg/L, from 100 mg/L to 400 mg/L, from 100 mg/L to 300 mg/L, from 100 mg/L to 200 mg/L, from 200 mg/L to 900 mg/L, from 200 mg/L to 800 mg/L, from 200 mg/L to 700 mg/L, from 200 mg/L to 600 mg/L, from 200 mg/L to 500 mg/L, from 200 mg/L to 400 mg/L, from 200 mg/L to 300 mg/L, from 300 mg/L to 900 mg/L, from 300 mg/L to 800 mg/L, from 300 mg/L to 700 mg/L, from 300 mg/L to 600 mg/L, from 300 mg/L to 500 mg/L, or from 300 mg/L to 400 mg/L. In a preferred embodiment of the present invention, the content of the rebaudioside A may be from 20 mg/L to 600 mg/L, from 30 mg/L to 550 mg/L, or from 100 mg/L to 500 mg/L.

In an embodiment of the present invention, the non-alcoholic beverage or alcoholic beverage contains rebaudioside D, and a content of rebaudioside D may be from 5 mg/L to 900 mg/L, from 5 mg/L to 800 mg/L, from 5 mg/L to 700 mg/L, from 5 mg/L to 600 mg/L, from 5 mg/L to 500 mg/L, from 5 mg/L to 400 mg/L, from 5 mg/L to 300 mg/L, from 5 mg/L to 200 mg/L, from 5 mg/L to 100 mg/L, from 10 mg/L to 900 mg/L, from 10 mg/L to 800 mg/L, from 10 mg/L to 700 mg/L, from 10 mg/L to 600 mg/L, from 10 mg/L to 550 mg/L, from 10 mg/L to 500 mg/L, from 10 mg/L to 400 mg/L, from 10 mg/L to 300 mg/L, from 10 mg/L to 200 mg/L, from 10 mg/L to 100 mg/L, from 20 mg/L to 900 mg/L, from 20 mg/L to 800 mg/L, from 20 mg/L to 700 mg/L, from 20 mg/L to 600 mg/L, from 20 mg/L to 550 mg/L, from 20 mg/L to 500 mg/L, from 20 mg/L to 400 mg/L, from 20 mg/L to 300 mg/L, from 20 mg/L to 200 mg/L, from 20 mg/L to 100 mg/L, from 30 mg/L to 900 mg/L, from 30 mg/L to 800 mg/L, from 30 mg/L to 700 mg/L, from 30 mg/L to 600 mg/L, from 30 mg/L to 550 mg/L, from 30 mg/L to 500 mg/L, from 30 mg/L to 400 mg/L, from 30 mg/L to 300 mg/L, from 30 mg/L to 200 mg/L, from 30 mg/L to 100 mg/L, from 50 mg/L to 900 mg/L, from 50 mg/L to 800 mg/L, from 50 mg/L to 700 mg/L, from 50 mg/L to 600 mg/L, from 50 mg/L to 500 mg/L, from 50 mg/L to 400 mg/L, from 50 mg/L to 300 mg/L, from 50 mg/L to 200 mg/L, from 50 mg/L to 100 mg/L, from 100 mg/L to 900 mg/L, from 100 mg/L to 800 mg/L, from 100 mg/L to 700 mg/L, from 100 mg/L to 600 mg/L, from 100 mg/L to 500 mg/L, from 100 mg/L to 400 mg/L, from 100 mg/L to 300 mg/L, from 100 mg/L to 200 mg/L, from 200 mg/L to 900 mg/L, from 200 mg/L to 800 mg/L, from 200 mg/L to 700 mg/L, from 200 mg/L to 600 mg/L, from 200 mg/L to 500 mg/L, from 200 mg/L to 400 mg/L, from 200 mg/L to 300 mg/L, from 300 mg/L to 900 mg/L, from 300 mg/L to 800 mg/L, from 300 mg/L to 700 mg/L, from 300 mg/L to 600 mg/L, from 300 mg/L to 500 mg/L, or from 300 mg/L to 400 mg/L. In a preferred embodiment of the present invention, the content of rebaudioside D may be from 20 mg/L to 600 mg/L, from 30 mg/L to 550 mg/L, or from 100 mg/L to 500 mg/L.

In an embodiment of the present invention, the non-alcoholic beverage or alcoholic beverage contains rebaudioside M, and a content of rebaudioside M may be from 5 mg/L to 900 mg/L, from 5 mg/L to 800 mg/L, from 5 mg/L to 700 mg/L, from 5 mg/L to 600 mg/L, from 5 mg/L to 500 mg/L, from 5 mg/L to 400 mg/L, from 5 mg/L to 300 mg/L, from 5 mg/L to 200 mg/L, from 5 mg/L to 100 mg/L, from 10 mg/L to 900 mg/L, from 10 mg/L to 800 mg/L, from 10 mg/L to 700 mg/L, from 10 mg/L to 600 mg/L, from 10 mg/L to 550 mg/L, from 10 mg/L to 500 mg/L, from 10 mg/L to 400 mg/L, from 10 mg/L to 300 mg/L, from 10 mg/L to 200 mg/L, from 10 mg/L to 100 mg/L, from 20 mg/L to 900 mg/L, from 20 mg/L to 800 mg/L, from 20 mg/L to 700 mg/L, from 20 mg/L to 600 mg/L, from 20 mg/L to 550 mg/L, from 20 mg/L to 500 mg/L, from 20 mg/L to 400 mg/L, from 20 mg/L to 300 mg/L, from 20 mg/L to 200 mg/L, from 20 mg/L to 100 mg/L, from 30 mg/L to 900 mg/L, from 30 mg/L to 800 mg/L, from 30 mg/L to 700 mg/L, from 30 mg/L to 600 mg/L, from 30 mg/L to 550 mg/L, from 30 mg/L to 500 mg/L, from 30 mg/L to 400 mg/L, from 30 mg/L to 300 mg/L, from 30 mg/L to 200 mg/L, from 30 mg/L to 100 mg/L, from 50 mg/L to 900 mg/L, from 50 mg/L to 800 mg/L, from 50 mg/L to 700 mg/L, from 50 mg/L to 600 mg/L, from 50 mg/L to 500 mg/L, from 50 mg/L to 400 mg/L, from 50 mg/L to 300 mg/L, from 50 mg/L to 200 mg/L, from 50 mg/L to 100 mg/L, from 100 mg/L to 900 mg/L, from 100 mg/L to 800 mg/L, from 100 mg/L to 700 mg/L, from 100 mg/L to 600 mg/L, from 100 mg/L to 500 mg/L, from 100 mg/L to 400 mg/L, from 100 mg/L to 300 mg/L, from 100 mg/L to 200 mg/L, from 200 mg/L to 900 mg/L, from 200 mg/L to 800 mg/L, from 200 mg/L to 700 mg/L, from 200 mg/L to 600 mg/L, from 200 mg/L to 500 mg/L, from 200 mg/L to 400 mg/L, from 200 mg/L to 300 mg/L, from 300 mg/L to 900 mg/L, from 300 mg/L to 800 mg/L, from 300 mg/L to 700 mg/L, from 300 mg/L to 600 mg/L, from 300 mg/L to 500 mg/L, or from 300 mg/L to 400 mg/L. In a preferred embodiment of the present invention, the content of rebaudioside M may be from 20 mg/L to 600 mg/L, from 30 mg/L to 550 mg/L, or from 100 mg/L to 500 mg/L.

The non-alcoholic beverage or alcoholic beverage according to an embodiment of the present invention may contain one or more selected from the group consisting of rebaudioside A, rebaudioside D, and rebaudioside M, and a total content thereof may be from 50 mg/L to 900 mg/L, from 50 mg/L to 800 mg/L, from 50 mg/L to 700 mg/L, from 50 mg/L to 600 mg/L, from 50 mg/L to 500 mg/L, from 50 mg/L to 400 mg/L, from 50 mg/L to 300 mg/L, from 50 mg/L to 200 mg/L, from 50 mg/L to 100 mg/L, from 100 mg/L to 900 mg/L, from 100 mg/L to 800 mg/L, from 100 mg/L to 700 mg/L, from 100 mg/L to 600 mg/L, from 100 mg/L to 500 mg/L, from 100 mg/L to 400 mg/L, from 100 mg/L to 300 mg/L, from 100 mg/L to 200 mg/L, from 200 mg/L to 900 mg/L, from 200 mg/L to 800 mg/L, from 200 mg/L to 700 mg/L, from 200 mg/L to 600 mg/L, from 200 mg/L to 500 mg/L, from 200 mg/L to 400 mg/L, from 200 mg/L to 300 mg/L, from 300 mg/L to 900 mg/L, from 300 mg/L to 800 mg/L, from 300 mg/L to 700 mg/L, from 300 mg/L to 600 mg/L, from 300 mg/L to 500 mg/L, or 300 mg/L to 400 mg/L. In a preferred embodiment of the present invention, the content of the one or more selected from the group consisting of rebaudioside A, rebaudioside D, and rebaudioside M may be from 50 mg/L to 600 mg/L, from 100 mg/L to 550 mg/L, or from 100 mg/L to 500 mg/L.

In an embodiment of the present invention, the non-alcoholic beverage or alcoholic beverage contains rebaudioside A, and a ratio of rebaudioside A to a total content of rebaudioside A (RebA) and stevioside (Stev) (i.e., RebA/(RebA + Stev)) may be 50 wt.% or more. Here, the content of stevioside may be 0 wt.%. In a preferred embodiment, the RebA/(RebA + Stev) may be from 50 to 100 wt.%, from 55 to 100 wt.%, from 60 to 100 wt.%, from 65 to 100 wt.%, from 70 to 100 wt.%, from 75 to 100 wt.%, from 80 to 100 wt.%, from 85 to 100 wt.%, from 90 to 100 wt.%, from 91 to 100 wt.%, from 92 to 100 wt.%, from 93 to 100 wt.%, from 94 to 100 wt.%, from 95 to 100 wt.%, from 96 to 100 wt.%, from 97 to 100 wt.%, from 98 to 100 wt.%, or from 99 to 100 wt.%. In a further preferred embodiment, the RebA/(RebA + Stev) may be from 75 to 100 wt.%, from 85 to 100 wt.%, or from 93 to 100 wt.%. A higher ratio of rebaudioside A results in a better taste quality, which is preferable.

In an embodiment of the present invention, the non-alcoholic beverage or alcoholic beverage contains rebaudioside A, and a ratio of rebaudioside A to a total content of rebaudioside A (RebA) and rebaudioside B (RebB) (i.e., RebA/(RebA + RebB)) may be 50 wt.% or more. Here, the content of rebaudioside B may be 0 wt.%. In a preferred embodiment, the RebA/(RebA + RebB) may be from 50 to 100 wt.%, from 55 to 100 wt.%, from 60 to 100 wt.%, from 65 to 100 wt.%, from 70 to 100 wt.%, from 75 to 100 wt.%, from 80 to 100 wt.%, from 85 to 100 wt.%, from 90 to 100 wt.%, from 91 to 100 wt.%, from 92 to 100 wt.%, from 93 to 100 wt.%, from 94 to 100 wt.%, from 95 to 100 wt.%, from 96 to 100 wt.%, from 97 to 100 wt.%, from 98 to 100 wt.%, or from 99 to 100 wt.%. In a further preferred embodiment, the RebA/(RebA + RebB) may be from 75 to 100 wt.%, from 85 to 100 wt.%, or from 93 to 100 wt.%. A higher ratio of rebaudioside A results in a better taste quality, which is preferable.

In an embodiment of the present invention, the content of the one or more steviol glycosides selected from the group consisting of stevioside, rebaudioside A, rebaudioside B, rebaudioside C, rebaudioside D, rebaudioside F, rebaudioside M, dulcoside A, rubusoside, and steviolbioside is from 0.5 to 150000 times the content of syringaldehyde, sinapaldehyde, or a combination thereof described below in weight ratio. The weight ratio may be from 3.0 to 150000 times, from 6.0 to 150000 times, from 10 to 150000 times, from 30 to 150000 times, from 50 to 150000 times, from 60 to 150000 times, from 100 to 150000 times, from 0.5 to 100000 times, from 3.0 to 100000 times, from 6.0 to 100000 times, from 10 to 100000 times, from 30 to 100000 times, from 50 to 100000 times, from 60 to 100000 times, from 100 to 100000 times, from 0.5 to 50000 times, from 3.0 to 50000 times, from 6.0 to 50000 times, from 10 to 50000 times, from 30 to 50000 times, from 50 to 50000 times, from 60 to 50000 times, from 100 to 50000 times, from 0.5 to 10000 times, from 3.0 to 10000 times, from 6.0 to 10000 times, from 10 to 10000 times, from 30 to 10000 times, from 50 to 10000 times, from 60 to 10000 times, from 100 to 10000 times, from 0.5 to 5000 times, from 3.0 to 5000 times, from 6.0 to 5000 times, from 10 to 5000 times, from 30 to 5000 times, from 50 to 5000 times, from 60 to 5000 times, from 100 to 5000 times, from 0.5 to 1000 times, from 3.0 to 1000 times, from 6.0 to 1000 times, from 10 to 1000 times, from 30 to 1000 times, from 50 to 1000 times, from 60 to 1000 times, from 100 to 1000 times, from 0.5 to 500 times, from 3.0 to 500 times, from 6.0 to 500 times, from 10 to 500 times, from 30 to 500 times, from 50 to 500 times, from 60 to 500 times, or from 100 to 500 times. In a preferred embodiment of the present invention, the weight ratio may be from 5 to 100 times, from 5 to 30 times, or from 5 to 20 times.

### Syringaldehyde, Sinapaldehyde

Syringaldehyde (also referred to as 4-hydroxy-3,5-dimethoxybenzaldehyde) and sinapaldehyde (also referred to as (E)-3-(4-hydroxy-3,5-dimethoxyphenyl)propenal) are compounds having the following structures, respectively.

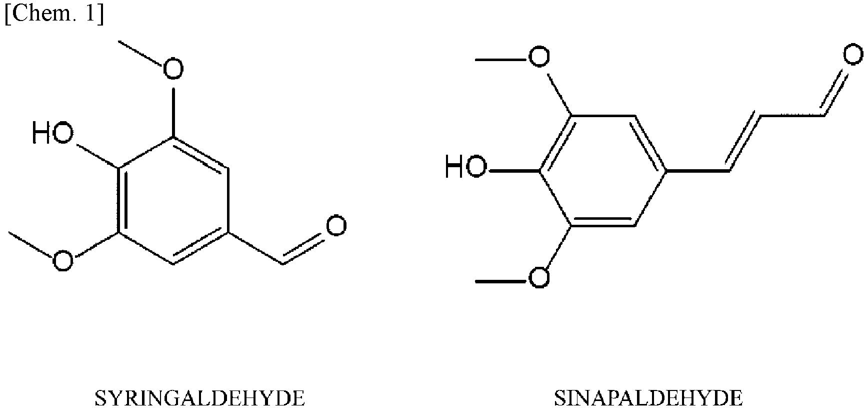

Syringaldehyde is an aroma component having a barrel aroma, and can impart a deep taste by being added to a non-alcoholic beverage (for example, non-alcoholic cocktail) or alcoholic beverage. However, when the content of syringaldehyde is too high, there is a tendency that the astringency remaining as an aftertaste on the tongue is strong and that the taste as a beverage is reduced. Sinapaldehyde is also an aroma component having a barrel aroma, and can give a deep taste by being added to a non-alcoholic beverage or alcoholic beverage. However, when the content of sinapaldehyde is too high, there is a tendency that the astringency remaining as an aftertaste on the tongue is strong and that the taste as a beverage is reduced. The present inventors have unexpectedly found that combining a steviol glycoside with syringaldehyde, sinapaldehyde, or a combination thereof can mask an astringent aftertaste derived from syringaldehyde and/or sinapaldehyde. Furthermore, surprisingly, the present inventors have found that such a combination can also reduce the residual sweetness, which is a negative taste quality of the steviol glycoside, resulting in improvement in overall taste quality as a non-alcoholic beverage or alcoholic beverage. Therefore, the non-alcoholic beverage or alcoholic beverage according to a preferred embodiment of the present invention is free from residual sweetness and an astringent aftertaste, and exhibits a fresh and sharp taste.

The non-alcoholic beverage or alcoholic beverage according to an embodiment of the present invention is a beverage containing syringaldehyde, sinapaldehyde, or a combination thereof, in which a content of the syringaldehyde, sinapaldehyde, or combination thereof is from 0.001 mg/L to 100 mg/L. Syringaldehyde and sinapaldehyde, which are used in combination, may be added separately to the beverage or may be mixed in advance and then added to the beverage. The content of syringaldehyde, sinapaldehyde, or a combination thereof may be from 0.005 mg/L to 100 mg/L, from 0.007 mg/L to 100 mg/L, from 0.01 mg/L to 100 mg/L, from 0.05 mg/L to 100 mg/L, from 0.1 mg/L to 100 mg/L, from 0.3 mg/L to 100 mg/L, from 0.5 mg/L to 100 mg/L, from 0.7 mg/L to 100 mg/L, from 1 mg/L to 100 mg/L, from 3 mg/L to 100 mg/L, from 5 mg/L to 100 mg/L, from 7 mg/L to 100 mg/L, from 10 mg/L to 100 mg/L, from 15 mg/L to 100 mg/L, from 20 mg/L to 100 mg/L, from 25 mg/L to 100 mg/L, from 30 mg/L to 100 mg/L, from 40 mg/L to 100 mg/L, from 50 mg/L to 100 mg/L, from 0.001 mg/L to 90 mg/L, from 0.005 mg/L to 90 mg/L, from 0.007 mg/L to 90 mg/L, from 0.01 mg/L to 90 mg/L, from 0.05 mg/L to 90 mg/L, from 0.1 mg/L to 90 mg/L, from 0.3 mg/L to 90 mg/L, from 0.5 mg/L to 90 mg/L, from 0.7 mg/L to 90 mg/L, from 1 mg/L to 90 mg/L, from 3 mg/L to 90 mg/L, from 5 mg/L to 90 mg/L, from 7 mg/L to 90 mg/L, from 10 mg/L to 90 mg/L, from 15 mg/L to 90 mg/L, from 20 mg/L to 90 mg/L, from 25 mg/L to 90 mg/L, from 30 mg/L to 90 mg/L, from 40 mg/L to 90 mg/L, from 50 mg/L to 90 mg/L, from 0.001 mg/L to 80 mg/L, from 0.005 mg/L to 80 mg/L, from 0.007 mg/L to 80 mg/L, from 0.01 mg/L to 80 mg/L, from 0.05 mg/L to 80 mg/L, from 0.1 mg/L to 80 mg/L, from 0.3 mg/L to 80 mg/L, from 0.5 mg/L to 80 mg/L, from 0.7 mg/L to 80 mg/L, from 1 mg/L to 80 mg/L, from 3 mg/L to 80 mg/L, from 5 mg/L to 80 mg/L, from 7 mg/L to 80 mg/L, from 10 mg/L to 80 mg/L, from 15 mg/L to 80 mg/L, from 20 mg/L to 80 mg/L, from 25 mg/L to 80 mg/L, from 30 mg/L to 80 mg/L, from 40 mg/L to 80 mg/L, from 50 mg/L to 80 mg/L, from 0.001 mg/L to 70 mg/L, from 0.005 mg/L to 70 mg/L, from 0.007 mg/L to 70 mg/L, from 0.01 mg/L to 70 mg/L, from 0.05 mg/L to 70 mg/L, from 0.1 mg/L to 70 mg/L, from 0.3 mg/L to 70 mg/L, from 0.5 mg/L to 70 mg/L, from 0.7 mg/L to 70 mg/L, from 1 mg/L to 70 mg/L, from 3 mg/L to 70 mg/L, from 5 mg/L to 70 mg/L, from 7 mg/L to 70 mg/L, from 10 mg/L to 70 mg/L, from 15 mg/L to 70 mg/L, from 20 mg/L to 70 mg/L, from 25 mg/L to 70 mg/L, from 30 mg/L to 70 mg/L, from 40 mg/L to 70 mg/L, from 50 mg/L to 70 mg/L, from 0.001 mg/L to 60 mg/L, from 0.005 mg/L to 60 mg/L, from 0.007 mg/L to 60 mg/L, from 0.01 mg/L to 60 mg/L, from 0.05 mg/L to 60 mg/L, from 0.1 mg/L to 60 mg/L, from 0.3 mg/L to 60 mg/L, from 0.5 mg/L to 60 mg/L, from 0.7 mg/L to 60 mg/L, from 1 mg/L to 60 mg/L, from 3 mg/L to 60 mg/L, from 5 mg/L to 60 mg/L, from 7 mg/L to 60 mg/L, from 10 mg/L to 60 mg/L, from 15 mg/L to 60 mg/L, from 20 mg/L to 60 mg/L, from 25 mg/L to 60 mg/L, from 30 mg/L to 60 mg/L, from 40 mg/L to 60 mg/L, or from 50 mg/L to 60 mg/L. In a preferred embodiment of the present invention, the content of syringaldehyde, sinapaldehyde, or a combination thereof is from 1 mg/L to 100 mg/L, from 5 mg/L to 50 mg/L, or from 5 mg/L to 30 mg/L. The content of syringaldehyde, sinapaldehyde, or a combination thereof can be measured using gas chromatography, and can be measured, for example, by concentration by solid-phase extraction and GC-MS (SIM method). Alternatively, when amounts of syringaldehyde and sinapaldehyde contained in the raw materials used are known, it can be calculated from the contents thereof and the amounts thereof added.

The content of syringaldehyde contained in the non-alcoholic beverage or alcoholic beverage in an embodiment of the present invention is preferably from 0.007 mg/L to 100 mg/L, more preferably from 0.1 mg/L to 50 mg/L, and even more preferably from 1 mg/L to 50 mg/L. The content of sinapaldehyde contained in the non-alcoholic beverage or alcoholic beverage in an embodiment of the present invention is preferably from 0.007 mg/L to 100 mg/L, more preferably from 0.1 mg/L to 50 mg/L, and even more preferably from 1 mg/L to 50 mg/L. A total content of syringaldehyde and sinapaldehyde in an embodiment of the present invention is preferably from 0.1 mg/L to 50 mg/L, more preferably from 2 mg/L to 50 mg/L, and even more preferably from 10 mg/L to 30 mg/L. When the content of syringaldehyde, sinapaldehyde, or a combination thereof is within this range, it is possible to impart taste thickness typical of liquors to the non-alcoholic beverage or alcoholic beverage, and also to mask the astringent aftertaste with the steviol glycoside. Thus, this range is preferable. The origin of syringaldehyde and/or sinapaldehyde is not particularly limited as long as syringaldehyde and/or sinapaldehyde is contained, in the amount(s) described above, in the non-alcoholic beverage or alcoholic beverage, and a plant-derived product, a chemically synthetic product, or a biosynthetic product may be added separately. Alternatively, syringaldehyde and/or sinapaldehyde may be derived from an alcohol component (e.g., a brown spirit) used in the non-alcoholic beverage or alcoholic beverage.

### Beverage

The beverage according to an embodiment of the present invention may be a non-alcoholic beverage or an alcoholic beverage. As used herein, the term "non-alcoholic beverage" means a beverage having an alcoholic strength of 0.05 v/v% or less. As used herein, the term "alcoholic beverage" refers to a beverage having an alcoholic strength of more than 0.05 v/v%. The "alcohol" referred to herein means ethyl alcohol (ethanol) unless otherwise specified. The alcoholic strength of the alcoholic beverage of the present invention is not particularly limited. The alcoholic beverage according to an embodiment of the present invention has an alcoholic strength of from 0.5 to 40 v/v%. The alcoholic strength herein is expressed by percentage on a volume/volume basis (v/v%). The alcoholic strength of the beverage can be measured by a method specified by the Japanese Regional Taxation Bureau. For example, it can be measured by using a vibration densitometer. Specifically, the alcoholic strength can be determined by preparing a sample from the beverage by removing carbonic acid gas through filtration or with ultrasonication, distilling the sample, measuring the density of the resulting distillate at 15°C, and converting the density using "Table 2. Conversion Table of Alcohol Content, Density (15°C), and Specific Gravity (15/15°C)", which is an attached table of the Official Analysis Method of the National Tax Agency (H19 National Tax Agency Order No. 6, revised on June 22, 2007). Alternatively, when the alcoholic strength of the liquor used is known, it can be calculated from the alcoholic strength thereof and the amount thereof added.

The alcohol component used in the alcoholic beverage of the present invention is not particularly limited. Any raw material may be used as long as it is a drinkable alcohol component such as a spirit, a liqueur, shochu, whiskey, brandy, a raw material alcohol (e.g., a neutral spirit), a Japanese plum liqueur, a fruit liquor, or a sweet fruit liquor. The alcoholic beverage in an embodiment of the present invention includes distilled liquors (including brown spirits) subjected to barrel aging, brewed liquors, and infused liquors. Examples of the distilled liquor subjected to barrel aging include whiskey (such as Scotch whiskey and bourbon whiskey), spirits (such as gin, vodka, tequila, and rum), brandy (such as cognac, calvados, and armagnac), and combinations thereof. Examples of the brewed liquor include Japanese sake, beers, and various fruit liquors such as red wines and white wines made from grape, and brewed liquors made from fruits other than grape (such as pineapple, apple, and pear). Examples of the infused liquor include Japanese plum liqueurs and infused liquors made from fruits other than Japanese plum (ume) (e.g., citrus fruits such as oranges, pome fruits such as apples, stone fruits such as peaches, and tropical and subtropical fruits such as mangos).

The alcoholic strength of the alcoholic beverage according to an embodiment of the present invention may be from 0.6 to 40 v/v%, from 0.6 to 35 v/v%, from 0.6 to 30 v/v%, from 0.6 to 25 v/v%, from 0.6 to 20 v/v%, from 0.6 to 15 v/v%, from 0.6 to 12 v/v%, from 1 to 40 v/v%, from 1 to 35 v/v%, from 1 to 30 v/v%, from 1 to 25 v/v%, from 1 to 20 v/v%, from 1 to 15 v/v%, from 1 to 14 v/v%, from 1 to 13 v/v%, from 1 to 12 v/v%, from 1 to 11 v/v%, from 1 to 10 v/v%, from 1 to 9 v/v%, from 1 to 8 v/v%, from 1 to 7 v/v%, from 1 to 6 v/v%, from 1 to 5 v/v%, from 1 to 4 v/v%, from 1 to 3 v/v%, from 1 to 2 v/v%, from 2 to 15 v/v%, from 2 to 14 v/v%, from 2 to 13 v/v%, from 2 to 12 v/v%, from 2 to 11 v/v%, from 2 to 10 v/v%, from 2 to 9 v/v%, from 2 to 8 v/v%, from 2 to 7 v/v%, from 2 to 6 v/v%, from 2 to 5 v/v%, from 2 to 4 v/v%, from 2 to 3 v/v%, from 2 to 2 v/v%, from 3 to 40 v/v%, from 3 to 35 v/v%, from 3 to 30 v/v%, from 3 to 25 v/v%, from 3 to 20 v/v%, from 3 to 15 v/v%, from 3 to 14 v/v%, from 3 to 13 v/v%, from 3 to 12 v/v%, from 3 to 11 v/v%, from 3 to 10 v/v%, from 3 to 9 v/v%, from 3 to 8 v/v%, from 3 to 7 v/v%, from 3 to 6 v/v%, from 3 to 5 v/v%, from 3 to 4 v/v%, from 4 to 40 v/v%, from 4 to 35 v/v%, from 4 to 30 v/v%, from 4 to 25 v/v%, from 4 to 20 v/v%, from 4 to 15 v/v%, from 4 to 14 v/v%, from 4 to 13 v/v%, from 4 to 12 v/v%, from 4 to 11 v/v%, from 4 to 10 v/v%, from 4 to 9 v/v%, from 4 to 8 v/v%, from 4 to 7 v/v%, from 4 to 6 v/v%, from 4 to 5 v/v%, from 5 to 40 v/v%, from 5 to 35 v/v%, from 5 to 30 v/v%, from 5 to 25 v/v%, from 5 to 20 v/v%, from 5 to 14 v/v%, from 5 to 13 v/v%, from 5 to 12 v/v%, from 5 to 11 v/v%, from 5 to 10 v/v%, from 5 to 9 v/v%, from 5 to 8 v/v%, from 5 to 7 v/v%, or from 5 to 6 v/v%. In another embodiment of the present invention, the alcoholic strength of the alcoholic beverage may be from 18 to 40 v/v%, from 18 to 35 v/v%, from 18 to 30 v/v%, from 18 to 25 v/v%, from 20 to 40 v/v%, from 20 to 35 v/v%, from 20 to 30 v/v%, from 20 to 25 v/v%, from 25 to 40 v/v%, from 25 to 35/v%, from 25 to 30 v/v%, or from 30 to 40 v/v%. The alcoholic strength of the alcoholic beverage according to a preferred embodiment of the present invention may be from 1 to 11 v/v%, from 2 to 10 v/v%, or from 2 to 9 v/v%.

The non-alcoholic beverage or alcoholic beverage according to an embodiment of the present invention may be a sparkling beverage. As used herein, the "sparkling beverage" is a beverage from which foam is generated, and includes, for example, a beverage in which a foam layer is formed on its liquid surface when the beverage is poured into a container. Examples of the sparkling beverage include carbonated beverages. A carbonated beverage is a beverage containing carbonic acid gas, and examples of such a beverage containing carbonic acid gas include a beverage produced by separately injecting carbonic acid gas into a beverage, a beverage produced by using carbonated water as a raw material, and a beverage in which carbonic acid gas is generated by fermenting a part of a raw material. A gas pressure of the sparkling beverage is not particularly limited, and can be from 0.5 to 5.0 kgf/cm², from 0.5 to 4.5 kgf/cm², from 0.5 to 4.0 kgf/cm², from 0.5 to 3.5 kgf/cm², from 0.5 to 3.0 kgf/cm², from 0.5 to 2.5 kgf/cm², from 0.5 to 2.0 kgf/cm², from 0.5 to 1.5 kgf/cm², from 1.0 to 5.0 kgf/cm², from 1.0 to 4.5 kgf/cm², from 1.0 to 4.0 kgf/cm², from 1.0 to 3.5 kgf/cm², from 1.0 to 3.0 kgf/cm², from 1.0 to 2.5 kgf/cm², from 1.0 to 2.0 kgf/cm², from 1.0 to 1.5 kgf/cm², from 1.5 to 5.0 kgf/cm², from 1.5 to 4.5 kgf/cm², from 1.5 to 4.0 kgf/cm², from 1.5 to 3.5 kgf/cm², from 1.5 to 3.0 kgf/cm², from 1.5 to 2.5 kgf/cm², from 1.5 to 2.0 kgf/cm², from 2.0 to 5.0 kgf/cm², from 2.0 to 4.5 kgf/cm², from 2.0 to 4.0 kgf/cm², from 2.0 to 3.5 kgf/cm², from 2.0 to 3.0 kgf/cm², from 2.0 to 2.5 kgf/cm², from 2.2 to 4.0 kgf/cm², from 2.2 to 3.5 kgf/cm², from 2.2 to 3.3 kgf/cm², from 2.2 to 3.2 kgf/cm², from 2.3 to 4.0 kgf/cm², from 2.3 to 3.5 kgf/cm², from 2.3 to 3.2 kgf/cm², from 3.0 to 4.0 kgf/cm², from 3.0 to 3.5 kgf/cm², from 1.1 to 2.4 kgf/cm², from 1.2 to 2.3 kgf/cm², from 1.3 to 2.2 kgf/cm², or from 1.4 to 2.1 kgf/cm². A content of the gas in the sparkling beverage can be defined by the gas pressure. As used herein, the term "gas pressure" refers to the gas pressure of carbonic acid gas in the sparkling beverage in a container unless otherwise specified. The gas pressure can be measured by fixing a beverage having a liquid temperature of 20°C to a gas internal pressure meter, once opening a stopcock of the gas internal pressure meter to release the carbonic acid gas in a head space to the atmosphere, then closing the stopcock again, shaking the gas internal pressure meter, and reading a value when a pointer reaches a certain position. As used herein, unless otherwise specified, the gas pressure of the sparkling beverage is measured using this method.

A flavor of the non-alcoholic beverage or alcoholic beverage in an embodiment of the present invention is not particularly limited, and can be adjusted to various flavors. For example, the non-alcoholic beverage or alcoholic beverage of the present invention may be a citrus fruit (such as mandarin orange, Hassaku orange, Citrus iyo, navel orange, Valencia orange, Hyuganatsu (Citrus tamurana), Kiyomi orange, ponkan orange, buntan (Citrus grandis), grapefruit, lemon, shekwasha (Citrus depressa), yuzu, and Kinkan (Chinese orange))-flavored beverage; pome fruit (such as apple, Japanese pear, Western pear, persimmon, loquat, pomegranate, and Karin (Chinese quince))-flavored beverage; stone fruit (such as peach, plum, nectarine, Japanese plum (ume), and apricot)-flavored beverage; berry (such as grape and fig)-flavored beverage; nut (such as chestnut, almond, pistachio, and cashew)-flavored beverage, tropical and subtropical fruit (such as pineapple, banana, papaya, lychee, kiwifruit, and mango)-flavored beverage; fruity vegetable (such as strawberry, melon, watermelon, and papaya)-flavored beverage; root vegetable (such as carrot and sweet potato)-flavored beverage; leaf and stem vegetable (such as celery)-flavored beverage; fruit vegetable (such as cucumber, pumpkin, tomato, and sweet corn)-flavored; savory herb and garnish (such as ginger, perilla, hot pepper, cinnamon, and pepper)-flavored beverage; energy drink-flavored; coffee-flavored beverage; tea (such as black tea, green tea, oolong tea, roasted tea, jasmine tea, and various herbal teas)-flavored beverage; cocoa-flavored, cola-flavored, dessert (such as almond jelly)-flavored beverage; or lactic drink (such as yoghurt and milk)-flavored beverage. The flavor of the non-alcoholic beverage or alcoholic beverage of the present invention can be adjusted by adding a component approved as a food additive such as fruit juice, a sour substance, a flavoring, a plant extract, a milk component, or another flavor, or a component which has been eaten for a long time and is generally recognized as safe even if it has not been approved.

A form of the non-alcoholic beverage or alcoholic beverage in an embodiment of the present invention is not limited and may be, for example, a form of a packaged non-alcoholic beverage or alcoholic beverage in which the beverage is enclosed and packaged in a container, such as a can, a bottle, a PET bottle, a pouch, a paper pack, and a plastic container. In the case of performing heat sterilization after packaging, the type thereof is not particularly limited, and the heat sterilization can be performed using, for example, a common method, such as UHT sterilization and retort sterilization. The temperature of the heat sterilization process is not particularly limited and is, for example, from 50 to 130°C and preferably from 50 to 120°C for 10 to 40 minutes. However, if a sterilization value equivalent to that in the above conditions is produced, a sterilization at an appropriate temperature for several seconds, for example, from 5 to 30 seconds, is also acceptable.

### Sweetness Intensity

As used herein, the term "sweetness intensity" refers to the intensity of sweetness exhibited by a substance. For example, when the sweetness intensity exhibited by sucrose per unit concentration Brix is defined as a sweetness of 1 herein, rebaudioside A, rebaudioside D, and rebaudioside M all have a sweetness about 300 times. The sweetness intensity of the non-alcoholic beverage or alcoholic beverage of the present invention is a numerical value obtained by multiplying the sweetness by the concentration (w/v% (which can be regarded as the same as w/w% in the case of a beverage)) of the sweetener in the non-alcoholic beverage or alcoholic beverage of the present invention. When the sweetness intensity is calculated in the present invention, in the case of high-intensity sweeteners having a wide range of sweetness, a central value thereof is used unless otherwise specified. In addition, the sweetness intensity of the non-alcoholic beverage or alcoholic beverage of the present invention does not need to be derived only from the steviol glycoside. In the case where the beverage contains a sweetener described below, the sweetness intensity is a total value of the sweetness intensities derived from the steviol glycoside and the sweetener. For example, the sweetness of a luo han guo extract is from 110 to 150 (central value: 130), the sweetness of mogroside V is from 240 to 300 (central value: 270), and the sweetness of thaumatin is 2000. The sweetnesses of general low-intensity sweeteners are as listed in Table 1. When the sweetness intensity exhibited by a sucrose solution per unit concentration Brix is defined as a sweetness of 1, the sweetness of glucose (glucose) is from 0.6 to 0.7 (central value: 0.65). The numerical value obtained by multiplying the sweetness by the concentration Brix value of glucose is the sweetness intensity of a glucose solution. Therefore, when the glucose concentration is a Brix of 1.5, the sweetness intensity of the glucose solution is 0.65 × 1.5 = 0.975. A relative ratio of the sweetness of another sweetener to the sweetness of sucrose of 1 can be determined from a known sugar sweetness conversion table or the like. However, for a sweetener whose relative ratio of the sweetness to the sweetness of sucrose of 1 is unknown or whose value varies depending on documents, the relative ratio of the sweetness thereof to the sweetness of sucrose of 1 may be determined by a sensory test. Examples of such a sensory test include a method in which samples are prepared by adding sugar to pure water so that the sweetness intensity ranges from 3.0 to 5.0 in increments of 0.5, and sugar-added samples having a sweetness intensity equivalent to that of an aqueous solution of a sweetener having a predetermined concentration are selected from the samples.

### [Table 1]

**Table 1**

| | |
|---|---|
| Sugar (D-form) | Sweetness |
| Sucrose | 1 |
| Glucose | from 0.6 to 0.7 |
| Fructose | from 1.3 to 1.7 |
| Maltose | 0.4 |
| Fructooligosaccharide | 0.6 |
| Maltooligosaccharide | 0.3 |
| Isomaltooligosaccharide | from 0.4 to 0.5 |
| Galactooligosaccharide | 0.7 |
| Lactose | from 0.2 to 0.3 |
| Psicose | 0.7 |
| Allose | 0.8 |
| Tagatose | 0.9 |
| Fructose-glucose liquid sugar | 0.75 |

The sweetness intensity of the non-alcoholic beverage or alcoholic beverage according to an embodiment of the present invention varies depending on specific beverages, and is preferably approximately from 0.1 to 20. For example, the sweetness intensity may be from 0.1 to 18, from 0.1 to 15, from 0.5 to 14.5, from 1.0 to 14.0, from 1.5 to 13.5, from 2.0 to 13.0, from 2.5 to 12.5, from 3.0 to 12.0, from 3.5 to 11.5, from 4.0 to 11.0, from 4.5 to 10.5, from 5.5 to 10.0, from 6.0 to 9.5, from 6.5 to 9.0, from 7.0 to 8.5, from 7.5 to 8.0, from 4.5 to 12.5, from 4.5 to 10.0, from 4.5 to 7.5, from 5.5 to 12.5, from 5.5 to 10.0, from 5.5 to 7.5, from 6.5 to 12.5, from 6.5 to 10.0, or from 6.5 to 7.5.

The sweetness intensity of the non-alcoholic beverage or alcoholic beverage according to another embodiment of the present invention may be more than 20 and 50 or less. For example, the sweetness intensity of the non-alcoholic beverage or alcoholic beverage according to another embodiment of the present invention may be from 21 to 50, from 25 to 50, from 30 to 50, from 35 to 50, from 40 to 50, from 21 to 45, from 25 to 45, from 30 to 45, from 35 to 45, from 21 to 40, from 25 to 40, from 30 to 40, from 21 to 35, or from 25 to 35. For example, in alcoholic beverages (including liqueurs and the like) having a relatively high alcoholic strength (for example, from 18 to 40 v/v%), the sweetness intensity according to the present embodiment is preferred. The non-alcoholic beverage or alcoholic beverage according to an embodiment of the present invention having a sweetness intensity in a range of more than 20 and 50 or less may be diluted with water or carbonated water at the time of consumption, as in the case of a concentrated liquid described later.

### Optional and Additional Sweetener

### Low-Intensity Sweetener

The non-alcoholic beverage or alcoholic beverage according to an embodiment of the present invention may further contain a low-intensity sweetener as long as the effects of the present invention are not impaired. As used herein, the low-intensity sweetener means a sweetener having a sweetness equivalent to or lower than that of sucrose. For example, the low-intensity sweetener exhibits a sweetness being 0.1 times or more and less than 5 times, less than 3 times, less than 2 times, less than 1.5 times, less than 1.0 times, less than 0.8 times, less than 0.7 times, less than 0.6 times, less than 0.5 times, or less than 0.4 times that of sucrose in the same amount as sucrose. Examples of the low-intensity sweetener that can be used in the present invention include a sweetener selected from glucose, sucrose, fructose, maltose, oligosaccharides, fructose-glucose liquid sugar, lactose, psicose, allose, tagatose, xylose, ribose, and combinations thereof. The non-alcoholic beverage or alcoholic beverage in a preferred embodiment of the present invention contains glucose, fructose, sucrose, a fructose-glucose liquid sugar, or a rare sugar (such as psicose (allulose), xylitol, and erythritol).

Since the low-intensity sweetener such as sucrose or a fructose-glucose liquid sugar often used in a beverage or the like has a high energy, the energy (calorie) of the non-alcoholic beverage or alcoholic beverage can be greatly reduced by reducing the content of the low-intensity sweetener. In an embodiment of the present invention, a low energy (i.e., low calorie) is achieved by suppressing the concentration of the low-intensity sweetener to a low level, while sufficient sweetness is perceived upon intake due to the combination of the low-intensity sweetener and the steviol glycoside. Thus, the content of the low-intensity sweetener is preferably an amount that provides 100 kcal/100 mL or less of energy. The energy of the non-alcoholic beverage or alcoholic beverage according to an embodiment of the present invention can be 100 kcal/100 mL or less, 0 to 100 kcal/100 mL, from 0 to 95 kcal/100 mL, from 0 to 90 kcal/100 mL, from 0 to 85 kcal/100 mL, from 0 to 80 kcal/100 mL, from 0 to 75 kcal/100 mL, from 0 to 70 kcal/100 mL, from 0 to 65 kcal/100 mL, from 0 to 60 kcal/100 mL, from 0 to 55 kcal/100 mL, from 0 to 50 kcal/100 mL, from 0 to 45 kcal/100 mL, from 0 to 40 kcal/100 mL, from 0 to 35 kcal/100 mL, from 0 to 30 kcal/100 mL, from 0 to 25 kcal/100 mL, from 0 to 20 kcal/100 mL, from 0 to 15 kcal/100 mL, from 0 to 10 kcal/100 mL, from 0 to 5 kcal/100 mL, from 5 to 90 kcal/100 mL, from 5 to 80 kcal/100 mL, from 5 to 70 kcal/100 mL, from 5 to 60 kcal/100 mL, from 5 to 55 kcal/100 mL, from 5 to 50 kcal/100 mL, from 5 to 45 kcal/100 mL, from 5 to 40 kcal/100 mL, from 5 to 35 kcal/100 mL, from 5 to 30 kcal/100 mL, from 5 to 25 kcal/100 mL, from 5 to 20 kcal/100 mL, from 5 to 15 kcal/100 mL, from 5 to 10 kcal/100 mL, from 10 to 90 kcal/100 mL, from 10 to 80 kcal/100 mL, from 10 to 70 kcal/100 mL, from 10 to 60 kcal/100 mL, from 10 to 55 kcal/100 mL, from 10 to 50 kcal/100 mL, from 10 to 45 kcal/100 mL, from 10 to 40 kcal/100 mL, from 10 to 35 kcal/100 mL, from 10 to 30 kcal/100 mL, from 10 to 25 kcal/100 mL, from 10 to 20 kcal/100 mL, from 10 to 15 kcal/100 mL, from 15 to 90 kcal/100 mL, from 15 to 80 kcal/100 mL, from 15 to 70 kcal/100 mL, from 15 to 60 kcal/100 mL, from 15 to 55 kcal/100 mL, from 15 to 50 kcal/100 mL, from 15 to 45 kcal/100 mL, from 15 to 40 kcal/100 mL, from 15 to 35 kcal/100 mL, from 15 to 30 kcal/100 mL, from 15 to 25 kcal/100 mL, from 15 to 20 kcal/100 mL, from 20 to 90 kcal/100 mL, from 20 to 80 kcal/100 mL, from 20 to 70 kcal/100 mL, from 20 to 60 kcal/100 mL, from 20 to 55 kcal/100 mL, from 20 to 50 kcal/100 mL, from 20 to 45 kcal/100 mL, from 20 to 40 kcal/100 mL, from 20 to 35 kcal/100 mL, from 20 to 30 kcal/100 mL, from 20 to 25 kcal/100 mL, from 25 to 90 kcal/100 mL, from 25 to 80 kcal/100 mL, from 25 to 70 kcal/100 mL, from 25 to 60 kcal/100 mL, from 25 to 55 kcal/100 mL, from 25 to 50 kcal/100 mL, from 25 to 45 kcal/100 mL, from 25 to 40 kcal/100 mL, from 25 to 35 kcal/100 mL, or from 25 to 30 kcal/100 mL, depending on embodiments. The energy of the sweet substance or alcohol is known, or can be determined by measuring the content with HPLC or the like and multiplying it by an energy conversion factor, or by measuring physical combustion heat by using a calorimeter (for example, a bomb calorimeter or the like) and correcting the value with a digestibility coefficient, an amount of heat excreted, or the like.

The energy of the non-alcoholic beverage or alcoholic beverage according to another embodiment of the present invention may be more than 100 kcal/100 mL and 250 kcal/100 mL or less. For example, the energy of the non-alcoholic beverage or alcoholic beverage according to another embodiment of the present invention can be from 110 to 250 kcal/100 mL, from 130 to 250 kcal/100 mL, from 150 to 250 kcal/100 mL, from 180 to 250 kcal/100 mL, from 110 to 230 kcal/100 mL, from 130 to 230 kcal/100 mL, from 150 to 230 kcal/100 mL, from 180 to 230 kcal/100 mL, from 110 to 200 kcal/100 mL, from 130 to 200 kcal/100 mL, from 150 to 200 kcal/100 mL, or from 180 to 200 kcal/100 mL. The energy of the sweet substance or alcohol is known, or can be determined by measuring the content with HPLC or the like and multiplying it by an energy conversion factor, or by measuring physical combustion heat by using a calorimeter (for example, a bomb calorimeter or the like) and correcting the value with a digestibility coefficient, an amount of heat excreted, or the like. For example, in alcoholic beverages (including liqueurs and the like) having a relatively high alcoholic strength (for example, from 18 to 40 v/v%), the energy according to the present embodiment is preferred. The non-alcoholic beverage or alcoholic beverage according to an embodiment of the present invention having an energy in a range of more than 100 kcal/100 mL and 250 kcal/100 mL or less may be diluted with water or carbonated water at the time of consumption, as in the case of a concentrated liquid described later.

### High-Intensity Sweetener

The non-alcoholic beverage or alcoholic beverage according to an embodiment of the present invention may further contain a high-intensity sweetener other than the steviol glycoside as long as the effects of the present invention are not impaired. As used herein, the term "high-intensity sweetener" refers to a compound that has a stronger sweetness than that of sucrose, and may be a naturally occurring compound, a synthetic compound, or a combination of naturally occurring and synthetic compounds. The high-intensity sweetener exhibits a sweetness being 5 times or more, 10 times or more, 50 times or more, 100 times or more, 500 times or more, 1000 times or more, 5000 times or more, 10000 times or more, 50000 times or more, or 100000 times or more that of sucrose in the same amount as sucrose. The steviol glycoside described above is also one of high-intensity sweeteners.

Specific examples of the high-intensity sweetener include peptide-based sweeteners such as aspartame, neotame, and advantame; sucrose derivatives such as sucralose; synthetic sweeteners (including sweeteners also naturally occurring, but mainly distributed in the form of synthetic products, such as neohesperidin dihydrochalcone) such as acesulfame potassium (acesulfame K), saccharin, saccharin sodium, sodium cyclamate, dulcin, disodium glycyrrhizinate, trisodium glycyrrhizinate, and neohesperidin dihydrochalcone; sweeteners extracted from plants, such as thaumatin, monellin, curculin, mabinlin, brazzein, pentadin, hernandulcin, 4β-hydroxyhernandulcin, miracullin, glycyrrhizin, rubusoside, and phyllodulcin; plant extracts containing a high-intensity sweetener component: Siraitia grosvenorii (luo han guo) extract, Glycyrrhiza glabra extract, Rubus suavissimus S. Lee (sugar tea) extract, Hydrangea macrophylla var. thunbergii (Japanese sweet tea) extract, Sclerochiton ilicifolius extract, Thaumataococcus daniellii Benth extract, Dioscoreophyllum volkensii (serendipity berry) extract, Curculigo latifolia extract, Richadella dulcifica (miracle fruit) extract, Pentadiplandra brazzeana extract, Capparis masaikai (Mabinlang) extract, and Lippia dulcis (Aztec sweet herb) extract; and sweet components in the extracts: mogrosides (such as mogroside V and mogroside IV) obtained by treating luo han guo and luo han guo extract, glycosides obtained from plant extracts such as a phyllodulcin glycoside, a sweet component contained in Glycyrrhiza glabra plant (a triterpene glycoside such as glycyrrhizin), a sweet component contained in Rubus suavissimus S. Lee plant (a diterpene glycoside such as rubusoside), a sweet component contained in Hydrangea macrophylla var. thunbergii plant (a dihydroisocoumarin such as phyllodulcin), a sweet component contained in Sclerochiton ilicifolius plant (an amino acid such as monatin), a sweet component contained in Thaumataococcus daniellii Benth plant (a protein such as thaumatin), a sweet component contained in Dioscoreophyllum volkensii plant (a protein such as monellin), a sweet component contained in Curculigo latifolia plant (a protein such as curculin), a sweet component contained in Richadella dulcifica plant (a protein such as miracullin), a sweet component contained in Pentadiplandra brazzeana plant (proteins such as brazzein and pentadin), a sweet component contained in Capparis masaikai plant (a protein such as mabinlin), and a sweet component contained in Lippia dulcis plant (sesquiterpenes such as hernandulcin and 4β-hydroxyhernandulcin).

The non-alcoholic beverage or alcoholic beverage according to another embodiment of the present invention may contain, in addition to the steviol glycoside described above, another high-intensity sweetener such as a peptide-based sweetener, a sucrose derivative, or a synthetic sweetener. For example, the non-alcoholic beverage or alcoholic beverage according to another embodiment of the present invention may contain one or more high-intensity sweeteners selected from acesulfame K and sucralose in addition to the steviol glycoside. That is, the non-alcoholic beverage or alcoholic beverage according to another embodiment of the present invention may contain only acesulfame K, only sucralose, or a combination of acesulfame K and sucralose.

The sweetness of the luo han guo extract is about from 110 to 150 times (central value: 130 times), the sweetness of mogroside V is about from 240 to 300 times (central value: 270 times), the sweetness of thaumatin is about 2000 times, the sweetness of acesulfame potassium is about 200 times, the sweetness of sucralose is about 600 times, and the sweetness of aspartame is about 180 times, that of sucrose. The relative ratios (sweetnesses) of the sweetness of various sweeteners to the sweetness of sucrose of 1 can be determined from a known sugar sweetness conversion table or the like. However, for a sweetener whose sweetness value is described as a numerical range or whose value varies depending on documents, the relative ratio of the sweetness thereof to the sweetness of sucrose of 1 is determined by a sensory test. Examples of such a sensory test include a method in which samples are prepared by adding sugar to pure water so that the sweetness intensity ranges from 3.0 to 5.0 in increments of 0.5, and sugar-added samples having a sweetness intensity equivalent to that of an aqueous solution of a sweetener having a predetermined concentration are selected from the samples.

As for the content of sweeteners other than the steviol glycosides, in the case of high-intensity sweeteners (e.g., mogroside V and artificial sweeteners), a composition ratio of a total amount of the steviol glycosides to a total amount of the high-intensity sweeteners other than the steviol glycosides contained in the non-alcoholic beverage or alcoholic beverage of the present invention may be from 99:1 to 50:50, from 95:5 to 55:45, from 90:10 to 60:40, from 85:15 to 65:35, from 80:20 to 70:30, from 80:20 to 75:25, from 99:1 to 85:5, from 98:2 to 86:14, from 97:3 to 87:13, from 96:4 to 88:12, or from 95:5 to 89:11 in mass ratio. When the non-alcoholic beverage or alcoholic beverage of the present invention contains low-intensity sweeteners (e.g., sucrose, fructose-glucose liquid sugar, and the like), the composition ratio of the total amount of the steviol glycosides to the total amount of the low-intensity sweeteners contained in the non-alcoholic beverage or alcoholic beverage may be from 1:1000 to 1:100, from 1:800 to 1:100, from 1:700 to 1:100, from 1:600 to 1:100, from 1:500 to 1:100, from 1:400 to 1:100, from 1:300 to 1:100, or from 1:200 to 1:100 in weight ratio.

### Sour Substance

The non-alcoholic beverage or alcoholic beverage according to an embodiment of the present invention may further contain a sour substance. The sour substance is not particularly limited as long as it can impart sourness to the beverage, and examples thereof include ascorbic acid, phosphoric acid, citric acid, gluconic acid, tartaric acid, lactic acid, malic acid, phytic acid, acetic acid, succinic acid, glucono-delta-lactone, and salts thereof. Examples of the salt include sodium citrate and sodium ascorbate. Among these sour substances, ascorbic acid, phosphoric acid, citric acid, gluconic acid, tartaric acid, lactic acid, malic acid, phytic acid, acetic acid, succinic acid, or salts thereof are preferable, phosphoric acid, citric acid, lactic acid, tartaric acid, acetic acid, or salts thereof are more preferable. One of these sour substances may be used alone, or two or more thereof may be used in combination.

The non-alcoholic beverage or alcoholic beverage according to an embodiment of the present invention may contain the above-described sour substance at such a concentration that the acidity is in a range of from 0.01 to 5.0 w/v%. As used herein, the term "acidity" refers to an acidity, in terms of citric acid, of the sour substance contained in the non-alcoholic beverage or alcoholic beverage. A range of the acidity may be from 0.01 to 4.0 w/v%, from 0.01 to 3.0 w/v%, from 0.01 to 2.0 w/v%, from 0.01 to 1.5 w/v%, from 0.02 to 0.95 w/v%, from 0.04 to 0.90 w/v%, from 0.06 to 0.85 w/v%, from 0.08 to 0.80 w/v%, from 0.10 to 0.75 w/v%, from 0.12 to 0.70 w/v%, from 0.14 to 0.65 w/v%, from 0.16 to 0.60 w/v%, from 0.18 to 0.55 w/v%, from 0.20 to 0.50 w/v%, from 0.22 to 0.45 w/v%, from 0.24 to 0.40 w/v%, or from 0.26 to 0.35 w/v%.

The acidity (in terms of citric acid) of the non-alcoholic beverage or alcoholic beverage of the present invention can be measured, for example, by a neutralization titration method using an automatic potentiometric titrator (for example, AT-500N available from Kyoto Electronics Manufacturing Co., Ltd.). Specifically, distilled water is added to 10 mL of a beverage sample to attain a total amount of 50 mL, and then a sodium hydroxide solution (0.1 N, reagent for volumetric analysis) is added dropwise from a burette under stirring until the pH reaches 8.0. Next, the acidity in terms of citric acid may be calculated based on the following equation: "Acidity (w/v%) of whole beverage" = titration amount (mL) × F × A × (100/sample amount (mL))
F: about 1.00 (factor of the 0.1 N sodium hydroxide solution)
A: 0.0064 (grams of citric acid corresponding to 1 mL of the sodium hydroxide solution).

The sour substance blended in the carbonated beverage of the present invention can be quantified by a known method such as a HPLC method. When the amount of citric acid added is known and no other sour substance is added, the acidity can be calculated from the amount of citric acid added.

The non-alcoholic beverage or alcoholic beverage according to an embodiment of the present invention may contain a sweetener and a sour substance, and the ratio of the sweetness intensity value to the acidity value, that is, "sweetness intensity/acidity" (also referred to as "sweetness/sourness ratio") may be from 1 to 150. Alternatively, it may be from 1 to 700. In another embodiment of the present invention, the sweetness intensity/acidity ratio value may be from 1.5 to 700, from 2 to 700, from 2 to 600, from 2 to 500, from 2 to 400, from 2 to 300, from 2 to 200, from 2 to 150, from 2 to 100, from 2 to 80, from 2 to 60, from 20 to 150, from 20 to 100, from 20 to 80, or from 20 to 60. In the case of a non-alcoholic beverage or alcoholic beverage having a refreshing taste, the sweetness intensity/acidity ratio value may be, for example, from 2 to 25, from 2 to 20, from 2 to 15, from 2 to 10, from 2 to 8, from 2 to 5, from 3 to 25, from 3 to 20, from 3 to 15, from 3 to 10, from 3 to 8, from 3 to 5, from 5 to 25, from 5 to 20, from 5 to 15, or from 5 to 10. In addition, in the case of a non-alcoholic beverage or alcoholic beverage having a strong taste, the sweetness intensity/acidity ratio value may be, for example, from 20 to 150, from 20 to 100, from 20 to 80, from 20 to 70, from 20 to 60, from 20 to 50, from 20 to 40, from 20 to 30, from 25 to 80, from 25 to 70, from 25 to 60, from 25 to 50, from 25 to 40, from 30 to 80, from 30 to 70, from 30 to 60, from 30 to 50, or from 30 to 40.

A pH of the non-alcoholic beverage or alcoholic beverage of the present invention is not particularly limited and may be, for example, from 2.0 to 6.5. For example, the pH of the non-alcoholic beverage or alcoholic beverage according to an embodiment of the present invention may be from 2.0 to 6.0, from 2.0 to 5.5, from 2.0 to 5.0, from 2.0 to 4.6, from 3.0 to 4.5, from 2.6 to 3.9, from 2.7 to 3.8, from 2.8 to 3.7, from 2.9 to 3.6, or from 3.0 to 4.0.

To the non-alcoholic beverage or alcoholic beverage of the present invention, an antioxidant (such as sodium erythorbate), an emulsifier (such as sucrose fatty acid ester, sorbitan fatty acid ester, or polyglycerin fatty acid ester), a dye, a flavoring, or the like can be appropriately added as long as the effects of the present invention are not impaired.

### Exemplary Embodiments of Present Invention

Exemplary embodiments of the beverage of the present invention are described below, but the present invention is not limited to the following embodiments.

In an embodiment of the present invention, there is provided an alcoholic beverage containing rebaudioside A and syringaldehyde, sinapaldehyde, or a combination thereof, in which a content of the syringaldehyde, sinapaldehyde, or combination thereof is from 1 mg/L to 100 mg/L, preferably from 5 mg/L to 50 mg/L, and more preferably from 5 mg/L to 30 mg/L, and a content of rebaudioside A is from 5 mg/L to 900 mg/L, preferably from 20 mg/L to 600 mg/L, more preferably from 30 mg/L to 550 mg/L, and even more preferably from 100 mg/L to 500 mg/L.

In an embodiment of the present invention, there is provided an alcoholic beverage containing rebaudioside A and syringaldehyde, sinapaldehyde, or a combination thereof, in which a content of the syringaldehyde, sinapaldehyde, or combination thereof is from 1 mg/L to 100 mg/L, preferably from 5 mg/L to 50 mg/L, and more preferably from 5 mg/L to 30 mg/L, a content of rebaudioside A is from 5 mg/L to 900 mg/L, preferably from 20 mg/L to 600 mg/L, more preferably from 30 mg/L to 550 mg/L, and even more preferably from 100 mg/L to 500 mg/L, and an alcoholic strength is from 0.5 to 40 v/v%, preferably from 1 to 15 v/v%, more preferably from 1 to 11 v/v%, and even more preferably from 2 to 10 v/v%.

In an embodiment of the present invention, there is provided an alcoholic beverage containing rebaudioside A and syringaldehyde, sinapaldehyde, or a combination thereof, in which a content of the syringaldehyde, sinapaldehyde, or combination thereof is from 1 mg/L to 100 mg/L, preferably from 5 mg/L to 50 mg/L, and more preferably from 5 mg/L to 30 mg/L, a content of rebaudioside A is from 5 mg/L to 900 mg/L, preferably from 20 mg/L to 600 mg/L, more preferably from 30 mg/L to 550 mg/L, and even more preferably from 100 mg/L to 500 mg/L, an alcoholic strength is from 0.5 to 40 v/v%, preferably from 1 to 15 v/v%, more preferably from 1 to 11 v/v%, and even more preferably from 2 to 10 v/v%, and a sweetness intensity/acidity ratio is preferably from 1 to 700 and more preferably from 1 to 150.

In an embodiment of the present invention, there is provided an alcoholic beverage containing rebaudioside D and syringaldehyde, sinapaldehyde, or a combination thereof, in which a content of the syringaldehyde, sinapaldehyde, or combination thereof is from 1 mg/L to 100 mg/L, preferably from 5 mg/L to 50 mg/L, and more preferably from 5 mg/L to 30 mg/L, and a content of rebaudioside D is from 5 mg/L to 900 mg/L, preferably from 20 mg/L to 600 mg/L, more preferably from 30 mg/L to 550 mg/L, and even more preferably from 100 mg/L to 500 mg/L.

In an embodiment of the present invention, there is provided an alcoholic beverage containing rebaudioside D and syringaldehyde, sinapaldehyde, or a combination thereof, in which a content of the syringaldehyde, sinapaldehyde, or combination thereof is from 1 mg/L to 100 mg/L, preferably from 5 mg/L to 50 mg/L, and more preferably from 5 mg/L to 30 mg/L, a content of rebaudioside D is from 5 mg/L to 900 mg/L, preferably from 20 mg/L to 600 mg/L, more preferably from 30 mg/L to 550 mg/L, and even more preferably from 100 mg/L to 500 mg/L, and an alcoholic strength is from 0.5 to 40 v/v%, preferably from 1 to 15 v/v%, more preferably from 1 to 11 v/v%, and even more preferably from 2 to 10 v/v%.

In an embodiment of the present invention, there is provided an alcoholic beverage containing rebaudioside D and syringaldehyde, sinapaldehyde, or a combination thereof, in which a content of the syringaldehyde, sinapaldehyde, or combination thereof is from 1 mg/L to 100 mg/L, preferably from 5 mg/L to 50 mg/L, and more preferably from 5 mg/L to 30 mg/L, a content of rebaudioside D is from 5 mg/L to 900 mg/L, preferably from 20 mg/L to 600 mg/L, more preferably from 30 mg/L to 550 mg/L, and even more preferably from 100 mg/L to 500 mg/L, an alcoholic strength is from 0.5 to 40 v/v%, preferably from 1 to 15 v/v%, more preferably from 1 to 11 v/v%, and even more preferably from 2 to 10 v/v%, and a sweetness intensity/acidity ratio is preferably from 1 to 700 and more preferably from 1 to 150.

In an embodiment of the present invention, there is provided an alcoholic beverage containing rebaudioside M and syringaldehyde, sinapaldehyde, or a combination thereof, in which a content of the syringaldehyde, sinapaldehyde, or combination thereof is from 1 mg/L to 100 mg/L, preferably from 5 mg/L to 50 mg/L, and more preferably from 5 mg/L to 30 mg/L, and a content of rebaudioside M is from 5 mg/L to 900 mg/L, preferably from 20 mg/L to 600 mg/L, more preferably from 30 mg/L to 550 mg/L, and even more preferably from 100 mg/L to 500 mg/L.

In an embodiment of the present invention, there is provided an alcoholic beverage containing rebaudioside M and syringaldehyde, sinapaldehyde, or a combination thereof, in which a content of the syringaldehyde, sinapaldehyde, or combination thereof is from 1 mg/L to 100 mg/L, preferably from 5 mg/L to 50 mg/L, and more preferably from 5 mg/L to 30 mg/L, a content of rebaudioside M is from 5 mg/L to 900 mg/L, preferably from 20 mg/L to 600 mg/L, more preferably from 30 mg/L to 550 mg/L, and even more preferably from 100 mg/L to 500 mg/L, and an alcoholic strength is from 0.5 to 40 v/v%, preferably from 1 to 15 v/v%, more preferably from 1 to 11 v/v%, and even more preferably from 2 to 10 v/v%.

In an embodiment of the present invention, there is provided an alcoholic beverage containing rebaudioside M and syringaldehyde, sinapaldehyde, or a combination thereof, in which a content of the syringaldehyde, sinapaldehyde, or combination thereof is from 1 mg/L to 100 mg/L, preferably from 5 mg/L to 50 mg/L, and more preferably from 5 mg/L to 30 mg/L, a content of rebaudioside M is from 5 mg/L to 900 mg/L, preferably from 20 mg/L to 600 mg/L, more preferably from 30 mg/L to 550 mg/L, and even more preferably from 100 mg/L to 500 mg/L, an alcoholic strength is from 0.5 to 40 v/v%, preferably from 1 to 15 v/v%, more preferably from 1 to 11 v/v%, and even more preferably from 2 to 10 v/v%, and a sweetness intensity/acidity ratio is preferably from 1 to 700 and more preferably from 1 to 150.

### 2. Method of Producing Beverage

In another aspect, the present invention provides a method of producing the beverage according to an aspect of the present invention (hereinafter referred to as "the production method of the present invention"). The production method of the present invention is not particularly limited, as long as an alcoholic beverage can be produced which contains: a steviol glycoside; and syringaldehyde, sinapaldehyde, or a combination thereof, in which a content of the syringaldehyde, sinapaldehyde, or combination thereof is from 0.001 mg/L to 100 mg/L.

The production method according to an embodiment of the present invention includes (a) adding a steviol glycoside, (b) optionally, adding an alcohol component (e.g., a brown spirit), (c) adding syringaldehyde and/or sinapaldehyde, and (d) optionally, adding water or carbonated water. When an alcoholic beverage is produced, an alcohol component is added in the step (b). In the addition of syringaldehyde and/or sinapaldehyde, when the two components are added, syringaldehyde and/or sinapaldehyde may be or may not be added simultaneously. When these components are added, the content of the syringaldehyde, sinapaldehyde, or combination thereof is adjusted to from 0.001 mg/L to 100 mg/L. In the addition of the alcohol component in (b), when an alcohol component containing syringaldehyde and/or sinapaldehyde, such as a brown spirit, is used, the addition of syringaldehyde and/or sinapaldehyde in (c) is adjusted. The components may be or may not be added simultaneously.

In another embodiment of the present invention, when a liquor containing syringaldehyde and/or sinapaldehyde as the alcohol component (for example, a brown spirit) is used, the alcoholic beverage according to an aspect of the present invention may be produced without additionally adding syringaldehyde and/or sinapaldehyde. That is, the production method according to another embodiment of the present invention includes (a) adding a steviol glycoside, (b) adding an alcohol component containing syringaldehyde and/or sinapaldehyde, and (c) optionally, adding water or carbonated water.

With respect to the production method of an embodiment of the present invention, the "beverage", "alcohol component", "syringaldehyde, sinapaldehyde", "steviol glycoside", "sweetness intensity", "optional and additional sweetener", and "sour substance" have the same meanings as the definitions described in the above section of "Beverage", and the numerical values thereof are the same as the numerical values described in the above section of "Beverage".

### 3. Concentrate for Providing Beverage

In another aspect, the present invention provides a concentrate for providing the beverage of the present invention (hereinafter referred to as "the concentrate of the present invention"). According to an embodiment of the present invention, the concentrate of the present invention is a 1.2 to 10-fold concentrate for providing the non-alcoholic beverage or alcoholic beverage of the present invention, and may be, for example, a 1.2 to 9-fold, 1.5 to 9-fold, 1.8 to 9-fold, 2 to 9-fold, 2 to 8-fold, 2 to 7-fold, 2 to 6-fold, 2 to 5-fold, 2 to 4-fold, 2 to 3-fold, 3 to 10-fold, 3 to 9-fold, 3 to 8-fold, 3 to 7-fold, 3 to 6-fold, 3 to 5-fold, 3 to 4-fold, 4 to 10-fold, 4 to 9-fold, 4 to 8-fold, 4 to 7-fold, 4 to 6-fold, 4 to 5-fold, 5 to 10-fold, 5 to 9-fold, 5 to 8-fold, 5 to 7-fold, or 5 to 6-fold concentrate.

The concentrate of the present invention becomes the non-alcoholic beverage or alcoholic beverage of the present invention when diluted in a predetermined ratio. For example, the concentrate of the present invention can be used as a syrup or stock solution in a beverage. In this case, the concentrate can be used after being diluted 1.2 times, 1.5 times, 1.8 times, 2 times, 3 times, 4 times, 5 times, 6 times, 7 times, 8 times, 9 times, or 10 times. Water or carbonated water can be used for dilution. The concentrate of the present invention is concentrated, and thus is preferable in terms of storability and transportability. The concentrate of the present invention may be solid or liquid.

The concentrate according to an embodiment of the present invention contains: a steviol glycoside; syringaldehyde, sinapaldehyde, or a combination thereof; and ethanol. The concentrate according to another embodiment of the present invention may further contains the components described in "1. Beverage Containing Steviol Glycoside".

The concentrate according to an embodiment of the present invention is a 2-fold concentrate of the non-alcoholic beverage or alcoholic beverage of the present invention, the concentrate containing:
a steviol glycoside; and
syringaldehyde, sinapaldehyde, or a combination thereof,
in which a content of the syringaldehyde, sinapaldehyde, or combination thereof is from 0.002 mg/L to 200 mg/L.

The concentrate according to an embodiment of the present invention is a 4-fold concentrate of the non-alcoholic beverage or alcoholic beverage of the present invention, the concentrate containing:
a steviol glycoside; and
syringaldehyde, sinapaldehyde, or a combination thereof,
in which a content of the syringaldehyde, sinapaldehyde, or combination thereof is from 0.004 mg/L to 400 mg/L.

The concentrate according to an embodiment of the present invention is a 6-fold concentrate of the non-alcoholic beverage or alcoholic beverage of the present invention, the concentrate containing:
a steviol glycoside; and
syringaldehyde, sinapaldehyde, or a combination thereof,
wherein a content of the syringaldehyde, sinapaldehyde, or combination thereof is from 0.006 mg/L to 600 mg/L.

With respect to the concentrate of an embodiment of the present invention, the "beverage", "alcohol component", "syringaldehyde, sinapaldehyde", "steviol glycoside", "sweetness intensity", "optional and additional sweetener", and "sour substance" have the same meanings as the definitions described in the above section of "Beverage".

As used herein, the term "about" means that the subject is present in a range of ±25%, ±10%, ±5%, ±3%, ±2%, or ±1% of the numerical value following the term "about". For example, the wording "about 10" means a range of from 7.5 to 12.5.

### Examples

Hereinafter, the present invention will be specifically described by illustrating examples, but the present invention is not limited to the following examples.

### [Example A] Evaluation of Alcoholic Beverage Containing Syringaldehyde and Steviol Glycoside

### (Example A-1) Comparative Evaluation with Alcoholic Beverage Containing Artificial Sweetener

### Preparation of Sample

Syringaldehyde, a neutral spirit, a sweetener, a sour substance, and water were mixed in blending amounts as listed in Tables 2 and 3, and the mixture was filled in a can container to prepare a sample liquid. The raw materials used are as follows: Syringaldehyde (Syringaldehyde, available from Tokyo Chemical Industry Co., Ltd.); a neutral spirit (alcoholic strength: 59%); acesulfame K: Celanese Production Germany GmbH & Co. KG, "sunett"; sucralose: Tate & Lyle Japan K.K., "Sucralose"; rebaudioside A (RebA): purity of 95.0% or more; and anhydrous citric acid: Jungbunzlauer "Citric Acid Anhydrous". After compounding the raw materials for each sample, carbonic acid gas was injected so that the gas pressure was about 1.6 kgf/cm² at a liquid temperature of 20°C.

### Evaluation of Residual Sweetness

### Evaluation Method

For the samples prepared as described above, four trained professional panelists independently scored the "residual sweetness" in increments of 0.5 on a scale of five grades, from Score 1 to Score 5, according to the following evaluation criteria, and the average value thereof was calculated. Here, the "residual sweetness" means residual sweetness derived from the sweetener contained in the beverage. A higher score means less residual sweetness. The residual sweetness was evaluated through swallowing of the samples.

### Evaluation Criteria

Score 5: Not perceived
Score 4: Slightly perceived
Score 3: Perceived
Score 2: Strongly perceived
Score 1: Extremely strongly perceived

### Evaluation of Astringent Aftertaste

### Evaluation Method

For the samples prepared as described above, four trained professional panelists independently scored the "astringent aftertaste" in increments of 0.5 on a scale of five grades, from Score 1 to Score 5, according to the following evaluation criteria, and the average value thereof was calculated. A higher score means a less astringent aftertaste derived from syringaldehyde and/or sinapaldehyde. The astringent aftertaste was evaluated through swallowing of the samples.

### Evaluation Criteria

Score 5: Not perceived
Score 4: Slightly perceived
Score 3: Perceived
Score 2: Strongly perceived
Score 1: Extremely strongly perceived

### Overall Evaluation

### Evaluation Method

For the samples prepared as described above, four trained professional panelists independently scored the "overall evaluation" in increments of 0.5 on a scale of five grades, from Score 1 to Score 5, according to the following evaluation criteria, and the average value thereof was calculated. Here, the "overall evaluation" means an overall evaluation of the taste quality as an alcoholic beverage (drink) based on whether or not the samples are free from residual sweetness and an astringent aftertaste and exhibit a fresh and sharp taste. The overall evaluation was made through swallowing of the samples.

### Evaluation Criteria

Score 5: Extremely good
Score 4: Very good
Score 3: Good
Score 2: Slightly good
Score 1: Not good

The evaluation results are listed in Tables 2 and 3. The energy (kcal/100 mL) was calculated on the assumption that the energy derived from acesulfame K, sucralose, and rebaudioside A was 0 (kcal/100 mL). The alcoholic strength was calculated from the amount of the neutral spirit added. The sweetness intensity and acidity were calculated from the amounts of added sweetener and sour substance, respectively. All the samples had an alcoholic strength of 5 v/v%, a sweetness intensity of 9, an acidity of 0.2 w/v%, a sweetness intensity/acidity ratio of 45, and an energy of 29 kcal/100 mL.

### [Table 2]

**Table 2**

| Sample No. | Unit | A-0 | A-1 | A-2 | A-3 | A-4 | A-5 | A-6 | A-7 |
|---|---|---|---|---|---|---|---|---|---|
| Neutral spirit | mL/L | 85 | 85 | 85 | 85 | 85 | 85 | 85 | 85 |
| Syringaldehyde | mg/L | 0 | 0.005 | 0.01 | 0.1 | 1 | 5 | 10 | 50 |
| Acesulfame K | mg/L | 225 | 225 | 225 | 225 | 225 | 225 | 225 | 225 |
| Sucralose | mg/L | 75 | 75 | 75 | 75 | 75 | 75 | 75 | 75 |
| Anhydrous citric acid | mg/L | 2200 | 2200 | 2200 | 2200 | 2200 | 2200 | 2200 | 2200 |
| Residual sweetness | - | 1.0 | 1.0 | 1.0 | 1.0 | 1.0 | 1.0 | 1.0 | 1.0 |
| Astringent aftertaste | - | 5.0 | 3.0 | 2.0 | 1.0 | 1.0 | 1.0 | 1.0 | 1.0 |
| Overall evaluation | - | 1.0 | 2.0 | 1.0 | 1.0 | 1.0 | 1.0 | 1.0 | 1.0 |

### [Table 3]

**Table 3**

| Sample No. | Unit | Sy0-0 | Sy0-1 | Sy0-2 | Sy0-3 | Sy0-4 | Sy0-5 | Sy0-6 | Sy0-7 |
|---|---|---|---|---|---|---|---|---|---|
| Neutral spirit | mL/L | 85 | 85 | 85 | 85 | 85 | 85 | 85 | 85 |
| Syringaldehyde | mg/L | 0 | 0.005 | 0.01 | 0.1 | 1 | 5 | 10 | 50 |
| Rebaudioside A | mg/L | 300 | 300 | 300 | 300 | 300 | 300 | 300 | 300 |
| Anhydrous citric acid | mg/L | 2200 | 2200 | 2200 | 2200 | 2200 | 2200 | 2200 | 2200 |
| Residual sweetness | - | 1.0 | 2.7 | 3.7 | 3.8 | 4.2 | 4.3 | 4.8 | 4.9 |
| Astringent aftertaste | - | 5.0 | 4.7 | 4.7 | 4.7 | 4.7 | 4.6 | 4.7 | 4.3 |
| Overall evaluation | - | 1.0 | 3.3 | 4.2 | 4.2 | 4.4 | 4.4 | 4.7 | 4.9 |

### (Example A-2) Evaluation Based on Difference in Rebaudioside A Concentration

In the same manner as in Example A-1, syringaldehyde, a neutral spirit, a sweetener, a sour substance, and water were mixed in blending amounts as listed in Tables 4 and 5, and the mixture was filled in a can container to prepare a sample liquid. The raw materials used are as follows: Syringaldehyde (Syringaldehyde, available from Tokyo Chemical Industry Co., Ltd.); a neutral spirit (alcoholic strength: 59%); rebaudioside A (RebA): purity of 95.0% or more; and anhydrous citric acid: Jungbunzlauer "Citric Acid Anhydrous". After compounding the raw materials for each sample, carbonic acid gas was injected so that the gas pressure was about 1.6 kgf/cm² at a liquid temperature of 20°C.

The samples thus prepared were evaluated for "residual sweetness", "astringent aftertaste", and "overall evaluation" by four trained professional panelists according to the same criteria as in Example A-1. The energy (kcal/100 mL) was calculated on the assumption that the energy derived from RebA was 0 (kcal/100 mL). The alcoholic strength was calculated from the amount of the neutral spirit added. The sweetness intensity and acidity were calculated from the amounts of added sweetener and sour substance, respectively. The results are listed in Tables 4 and 5. All the samples described in Table 4 had an alcoholic strength of 5 v/v%, a sweetness intensity of 1, an acidity of 0.2 w/v%, a sweetness intensity/acidity ratio of 5, and an energy of 29 kcal/100 mL. All the samples described in Table 5 had an alcoholic strength of 5 v/v%, a sweetness intensity of 15, an acidity of 0.2 w/v%, a sweetness intensity/acidity ratio of 75, and an energy of 29 kcal/100 mL.

**[Table 4]**

| Table 4: Evaluation of samples with low rebaudioside A content | | | | | | | | | |
|---|---|---|---|---|---|---|---|---|---|
| Sample No. | Unit | Sy1-0 | Sy1-1 | Sy1-3 | Sy1-4 | Sy1-4 | Sy1-5 | Sy1-6 | Sy1-7 |
| Neutral spirit | mL/L | 85 | 85 | 85 | 85 | 85 | 85 | 85 | 85 |
| Syringaldehyde | mg/L | 0 | 0.005 | 0.01 | 0.1 | 1 | 5 | 10 | 50 |
| Rebaudioside A | mg/L | 33 | 33 | 33 | 33 | 33 | 33 | 33 | 33 |
| Anhydrous citric acid | mg/L | 2200 | 2200 | 2200 | 2200 | 2200 | 2200 | 2200 | 2200 |
| Residual sweetness | - | 1.0 | 3.3 | 4.3 | 4.3 | 4.3 | 4.2 | 4.7 | 4.9 |
| Astringent aftertaste | - | 5.0 | 4.9 | 4.9 | 4.9 | 4.7 | 4.7 | 4.6 | 4.4 |
| Overall evaluation | - | 1.0 | 3.9 | 4.4 | 4.4 | 4.4 | 4.3 | 4.6 | 4.5 |

**[Table 5]**

| Table 5: Evaluation of samples with high rebaudioside A content | | | | | | | | | |
|---|---|---|---|---|---|---|---|---|---|
| Sample No. | Unit | Sy2-0 | Sy2-1 | Sy2-2 | Sy2-3 | Sy2-4 | Sy2-5 | Sy2-6 | Sy2-7 |
| Neutral spirit | mL/L | 85 | 85 | 85 | 85 | 85 | 85 | 85 | 85 |
| Syringaldehyde | mg/L | 0 | 0.005 | 0.01 | 0.1 | 1 | 5 | 10 | 50 |
| Rebaudioside A | mg/L | 500 | 500 | 500 | 500 | 500 | 500 | 500 | 500 |
| Anhydrous citric acid | mg/L | 2200 | 2200 | 2200 | 2200 | 2200 | 2200 | 2200 | 2200 |
| Residual sweetness | - | 1.0 | 2.6 | 3.4 | 3.9 | 4.1 | 4.0 | 4.7 | 4.9 |
| Astringent aftertaste | - | 5.0 | 4.9 | 4.9 | 4.9 | 4.7 | 4.2 | 4.1 | 3.9 |
| Overall evaluation | - | 1.0 | 3.6 | 3.9 | 4.4 | 4.4 | 4.2 | 4.6 | 4.5 |

### (Example A-3) Evaluation Based on Difference in alcoholic strength

In the same manner as in Example A-1, syringaldehyde, a neutral spirit, a sweetener, a sour substance, and water were mixed in blending amounts as shown in Table 6, and the mixture was filled in a can container to prepare a sample liquid. The raw materials used are as follows: Syringaldehyde (Syringaldehyde, available from Tokyo Chemical Industry Co., Ltd.); a neutral spirit (alcoholic strength: 59%); rebaudioside A (RebA): purity of 95.0% or more; and anhydrous citric acid: Jungbunzlauer "Citric Acid Anhydrous". After compounding the raw materials for each sample, carbonic acid gas was injected so that the gas pressure was about 1.6 kgf/cm² at a liquid temperature of 20°C.

The samples thus prepared were evaluated for "residual sweetness", "astringent aftertaste", and "overall evaluation" by four trained professional panelists according to the same criteria as in Example A-1. The energy (kcal/100 mL) was calculated on the assumption that the energy derived from rebaudioside A was 0 (kcal/100 mL). The alcoholic strength was calculated from the amount of the neutral spirit added. The sweetness intensity and acidity were calculated from the amounts of added sweetener and sour substance, respectively. The test was performed on various beverage samples with different alcoholic strengths. The results are listed in Table 6. All the samples had a sweetness intensity of 9, an acidity of 0.2 w/v%, and a sweetness intensity/acidity ratio of 45.

**Table 6**

| Table 6: Evaluation based on difference in alcoholic strength | | | | | |
|---|---|---|---|---|---|
| Sample No. | Unit | Sy3-1 | Sy3-2 | Sy3-3 | Sy3-4 |
| Neutral spirit | mL/L | 34 | 34 | 153 | 153 |
| Syringaldehyde | mg/L | 0.1 | 10 | 0.1 | 10 |
| Rebaudioside A | mg/L | 300 | 300 | 300 | 300 |
| Anhydrous citric acid | mg/L | 2200 | 2200 | 2200 | 2200 |
| Alcoholic strength | v/v% | 2 | 2 | 9 | 9 |
| Energy | kcal/100 mL | 12 | 12 | 51 | 51 |
| Residual sweetness | - | 4.2 | 4.9 | 4.3 | 4.9 |
| Astringent aftertaste | - | 4.7 | 4.8 | 4.6 | 4.1 |
| Overall evaluation | - | 4.3 | 4.9 | 4.3 | 4.7 |

### (Example A-4) Evaluation Based on Difference in Steviol Glycoside

In the same manner as in Example A-1, syringaldehyde, a neutral spirit, a sweetener, a sour substance, and water were mixed in blending amounts as listed in Table 7, and the mixture was filled in a can container to prepare a sample liquid. The raw materials used are as follows: Syringaldehyde (Syringaldehyde, available from Tokyo Chemical Industry Co., Ltd.); a neutral spirit (alcoholic strength: 59%); rebaudioside D: purity of 90% or more; rebaudioside M: purity of 96.6%; and anhydrous citric acid: Jungbunzlauer "Citric Acid Anhydrous". After compounding the raw materials for each sample, carbonic acid gas was injected so that the gas pressure was about 1.6 kgf/cm² at a liquid temperature of 20°C.

The samples thus prepared were evaluated for "residual sweetness", "astringent aftertaste", and "overall evaluation" by four trained professional panelists according to the same criteria as in Example A-1. The energy (kcal/100 mL) was calculated on the assumption that the energy derived from rebaudioside D or M was 0 (kcal/100 mL). The alcoholic strength was calculated from the amount of the neutral spirit added. The sweetness intensity and acidity were calculated from the amounts of added sweetener and sour substance, respectively. The results are listed in Table 7. All the samples had an alcoholic strength of 5 v/v%, a sweetness intensity of 9, an acidity of 0.2 w/v%, a sweetness intensity/acidity ratio of 45, and an energy of 29 kcal/100 mL.

**Table 7**

| Table 7: Evaluation based on difference in steviol glycoside | | | | | |
|---|---|---|---|---|---|
| Sample No. | Unit | Sy4-1 | Sy4-2 | Sy4-3 | Sy4-4 |
| Neutral spirit | mL/L | 85 | 85 | 85 | 85 |
| Syringaldehyde | mg/L | 0.1 | 10 | 0.1 | 10 |
| Rebaudioside D | mg/L | 300 | 300 | - | - |
| Rebaudioside M | mg/L | - | - | 300 | 300 |
| Anhydrous citric acid | mg/L | 2200 | 2200 | 2200 | 2200 |
| Residual sweetness | - | 3.8 | 4.8 | 3.8 | 4.8 |
| Astringent aftertaste | - | 4.7 | 4.7 | 4.7 | 4.7 |
| Overall evaluation | - | 4.2 | 4.7 | 4.2 | 4.7 |

| | | | | | |
|---|---|---|---|---|---|
| * In the table, the symbol "-" regarding the amounts of the components added means that the components are not added. | | | | | |

### [Example B] Evaluation of Alcoholic Beverage Containing Sinapaldehyde and Steviol Glycoside

### (Example B-1) Comparative Evaluation with Alcoholic Beverage Containing Artificial Sweetener

### Preparation of Sample

Sinapaldehyde, a neutral spirit, a sweetener, a sour substance, and water were mixed in blending amounts as listed in Tables 8 and 9, and the mixture was filled in a can container to prepare a sample liquid. The raw materials used are as follows: Sinapaldehyde (trans-3,5-dimethoxy-4-hydroxy-cinnamaldehyde, available from Sigma-Aldrich); a neutral spirit (alcoholic strength: 59%); acesulfame K: Celanese Production Germany GmbH & Co. KG, "sunett"; sucralose: Tate & Lyle Japan K.K., "Sucralose"; rebaudioside A (RebA): purity of 95.0% or more; and anhydrous citric acid: Jungbunzlauer "Citric Acid Anhydrous". After compounding the raw materials for each sample, carbonic acid gas was injected so that the gas pressure was about 1.6 kgf/cm² at a liquid temperature of 20°C.

### Evaluation of Sample

The samples thus prepared were evaluated for "residual sweetness", "astringent aftertaste", and "overall evaluation" by four trained professional panelists according to the same criteria as in Example A-1. The energy (kcal/100 mL) was calculated on the assumption that the energy derived from rebaudioside A was 0 (kcal/100 mL). The alcoholic strength was calculated from the amount of the neutral spirit added. The sweetness intensity and acidity were calculated from the amounts of added sweetener and sour substance, respectively. The results are listed in Tables 8 and 9. All the samples had an alcoholic strength of 5 v/v%, a sweetness intensity of 9, an acidity of 0.2 w/v%, a sweetness intensity/acidity ratio of 45, and an energy of 29 kcal/100 mL.

### [Table 8]

**Table 8**

| Sample No. | Unit | A-0 | B-1 | B-2 | B-3 | B-4 | B-5 | B-6 | B-7 |
|---|---|---|---|---|---|---|---|---|---|
| Neutral spirit | mL/L | 85 | 85 | 85 | 85 | 85 | 85 | 85 | 85 |
| Sinapaldehyde | mg/L | 0 | 0.005 | 0.01 | 0.1 | 1 | 5 | 10 | 50 |
| Acesulfame K | mg/L | 225 | 225 | 225 | 225 | 225 | 225 | 225 | 225 |
| Sucralose | mg/L | 75 | 75 | 75 | 75 | 75 | 75 | 75 | 75 |
| Anhydrous citric acid | mg/L | 2200 | 2200 | 2200 | 2200 | 2200 | 2200 | 2200 | 2200 |
| Residual sweetness | - | 1.0 | 1.0 | 1.0 | 1.0 | 1.0 | 1.0 | 1.0 | 1.0 |
| Astringent aftertaste | - | 5.0 | 3.0 | 2.0 | 1.0 | 1.0 | 1.0 | 1.0 | 1.0 |
| Overall evaluation | - | 1.0 | 2.0 | 1.0 | 1.0 | 1.0 | 1.0 | 1.0 | 1.0 |

### [Table 9]

**Table 9**

| Sample No. | Unit | Sy0-0 | Si0-1 | Si0-2 | Si0-3 | Si0-4 | Si0-5 | Si0-6 | Si0-7 |
|---|---|---|---|---|---|---|---|---|---|
| Neutral spirit | mL/L | 85 | 85 | 85 | 85 | 85 | 85 | 85 | 85 |
| Sinapaldehyde | mg/L | 0 | 0.005 | 0.01 | 0.1 | 1 | 5 | 10 | 30 |
| Rebaudioside A | mg/L | 300 | 300 | 300 | 300 | 300 | 300 | 300 | 300 |
| Anhydrous citric acid | mg/L | 2200 | 2200 | 2200 | 2200 | 2200 | 2200 | 2200 | 2200 |
| Residual sweetness | - | 1.0 | 3.3 | 4.0 | 4.0 | 4.0 | 4.4 | 4.6 | 5.0 |
| Astringent aftertaste | - | 5.0 | 4.2 | 4.5 | 4.5 | 4.0 | 4.1 | 4.3 | 4.7 |
| Overall evaluation | - | 1.0 | 3.3 | 4.3 | 4.3 | 4.3 | 4.5 | 4.7 | 5.0 |

### (Example B-2) Evaluation Based on Difference in Rebaudioside A Concentration

In the same manner as in Example B-1, sinapaldehyde, a neutral spirit, a sweetener, a sour substance, and water were mixed in blending amounts as listed in Tables 10 and 11, and the mixture was filled in a can container to prepare a sample liquid. The raw materials used are as follows: Sinapaldehyde (trans-3,5-dimethoxy-4-hydroxy-cinnamaldehyde, available from Sigma-Aldrich); a neutral spirit (alcoholic strength: 59%); rebaudioside A (RebA): purity of 95.0% or more; and anhydrous citric acid: Jungbunzlauer "Citric Acid Anhydrous". After compounding the raw materials for each sample, carbonic acid gas was injected so that the gas pressure was about 1.6 kgf/cm² at a liquid temperature of 20°C.

The samples thus prepared were evaluated for "residual sweetness", "astringent aftertaste", and "overall evaluation" by four trained professional panelists according to the same criteria as in Example A-1. The energy (kcal/100 mL) was calculated on the assumption that the energy derived from rebaudioside A was 0 (kcal/100 mL). The alcoholic strength was calculated from the amount of the neutral spirit added. The sweetness intensity and acidity were calculated from the amounts of added sweetener and sour substance, respectively. The results are listed in Tables 10 and 11. All the samples listed in Table 10 had an alcoholic strength of 5 v/v%, a sweetness intensity of 1, an acidity of 0.2 w/v%, a sweetness intensity/acidity ratio of 5, and an energy of 29 kcal/100 mL. All the samples listed in Table 11 had an alcoholic strength of 5 v/v%, a sweetness intensity of 15, an acidity of 0.2 w/v%, a sweetness intensity/acidity ratio of 75, and an energy of 29 kcal/100 mL.

**[Table 10]**

| Table 10: Evaluation of samples with low rebaudioside A content | | | | | | | | | |
|---|---|---|---|---|---|---|---|---|---|
| Sample No. | Unit | Sy1-0 | Si1-1 | Si1-2 | Si1-3 | Si1-4 | Si1-5 | Si1-6 | Si1-7 |
| Neutral spirit | mL/L | 85 | 85 | 85 | 85 | 85 | 85 | 85 | 85 |
| Sinapaldehyde | mg/L | 0 | 0.005 | 0.01 | 0.1 | 1 | 5 | 10 | 30 |
| Rebaudioside A | mg/L | 33 | 33 | 33 | 33 | 33 | 33 | 33 | 33 |
| Anhydrous citric acid | mg/L | 2200 | 2200 | 2200 | 2200 | 2200 | 2200 | 2200 | 2200 |
| Residual sweetness | - | 1.0 | 3.3 | 4.3 | 4.3 | 4.3 | 4.2 | 4.7 | 4.9 |
| Astringent aftertaste | - | 5.0 | 4.7 | 4.8 | 4.8 | 4.7 | 4.3 | 4.3 | 4.3 |
| Overall evaluation | - | 1.0 | 3.9 | 4.4 | 4.4 | 4.4 | 4.4 | 4.6 | 4.8 |

**[Table 11]**

| Table 11: Evaluation of samples with high rebaudioside A content | | | | | | | | | |
|---|---|---|---|---|---|---|---|---|---|
| Sample No. | Unit | Sy2-0 | Si2-1 | Si2-2 | Si2-3 | Si2-4 | Si2-5 | Si2-6 | Si2-7 |
| Neutral spirit | mL/L | 85 | 85 | 85 | 85 | 85 | 85 | 85 | 85 |
| Sinapaldehyde | mg/L | 0 | 0.005 | 0.01 | 0.1 | 1 | 5 | 10 | 30 |
| Rebaudioside A | mg/L | 500 | 500 | 500 | 500 | 500 | 500 | 500 | 500 |
| Anhydrous citric acid | mg/L | 2200 | 2200 | 2200 | 2200 | 2200 | 2200 | 2200 | 2200 |
| Residual sweetness | - | 1.0 | 2.6 | 3.6 | 4.3 | 4.3 | 4.2 | 4.7 | 4.9 |
| Astringent aftertaste | - | 5.0 | 4.7 | 4.8 | 4.8 | 4.5 | 4.2 | 4.0 | 4.0 |
| Overall evaluation | - | 1.0 | 3.6 | 4.3 | 4.4 | 4.4 | 4.4 | 4.6 | 4.8 |

### (Example B-3) Evaluation based on Difference in Alcoholic Strength

In the same manner as in Example B-1, sinapaldehyde, a neutral spirit, a sweetener, a sour substance, and water were mixed in blending amounts as listed in Table 12, and the mixture was filled in a can container to prepare a sample liquid. The raw materials used are as follows: Sinapaldehyde (trans-3,5-dimethoxy-4-hydroxy-cinnamaldehyde, available from Sigma-Aldrich); a neutral spirit (alcoholic strength: 59%); rebaudioside A (RebA): purity of 95.0% or more; and anhydrous citric acid: Jungbunzlauer "Citric Acid Anhydrous". After compounding the raw materials for each sample, carbonic acid gas was injected so that the gas pressure was about 1.6 kgf/cm² at a liquid temperature of 20°C.

The samples thus prepared were evaluated for "residual sweetness", "astringent aftertaste", and "overall evaluation" by four trained professional panelists according to the same criteria as in Example A-1. The energy (kcal/100 mL) was calculated on the assumption that the energy derived from rebaudioside A was 0 (kcal/100 mL). The alcoholic strength was calculated from the amount of the neutral spirit added. The sweetness intensity and acidity were calculated from the amounts of added sweetener and sour substance, respectively. The test was performed on various beverage samples with different alcoholic strengths. The results are listed in Table 12. All the samples had a sweetness intensity of 9, an acidity of 0.2 w/v%, and a sweetness intensity/acidity ratio of 45.

**[Table 12]**

| Table 12: Evaluation based on difference in alcoholic strength | | | | | |
|---|---|---|---|---|---|
| Sample No. | Unit | Si3-1 | Si3-2 | Si3-3 | Si3-4 |
| Neutral spirit | mL/L | 34 | 34 | 153 | 153 |
| Sinapaldehyde | mg/L | 0.1 | 10 | 0.1 | 10 |
| Rebaudioside A | mg/L | 300 | 300 | 300 | 300 |
| Anhydrous citric acid | mg/L | 2200 | 2200 | 2200 | 2200 |
| Alcoholic strength | v/v% | 2 | 2 | 9 | 9 |
| Energy | kcal/100 mL | 12 | 12 | 51 | 51 |
| Residual sweetness | - | 4.1 | 4.8 | 4.2 | 4.9 |
| Astringent aftertaste | - | 4.7 | 4.9 | 4.6 | 4.3 |
| Overall evaluation | - | 4.4 | 4.9 | 4.4 | 4.7 |

### (Example B-4) Evaluation Based on Difference in Steviol Glycoside

In the same manner as in Example B-1, sinapaldehyde, a neutral spirit, a sweetener, a sour substance, and water were mixed in blending amounts as listed in Table 13, and the mixture was filled in a can container to prepare a sample liquid. The raw materials used are as follows: Sinapaldehyde (trans-3,5-dimethoxy-4-hydroxy-cinnamaldehyde, available from Sigma-Aldrich); a neutral spirit (alcoholic strength: 59%); rebaudioside D: purity of 90% or more; rebaudioside M: purity of 96.6%; and anhydrous citric acid: Jungbunzlauer "Citric Acid Anhydrous". After compounding the raw materials for each sample, carbonic acid gas was injected so that the gas pressure was about 1.6 kgf/cm² at a liquid temperature of 20°C.

The samples thus prepared were evaluated for "residual sweetness", "astringent aftertaste", and "overall evaluation" by four trained professional panelists according to the same criteria as in Example A-1. The energy (kcal/100 mL) was calculated on the assumption that the energy derived from rebaudioside A was 0 (kcal/100 mL). The alcoholic strength was calculated from the amount of the neutral spirit added. The sweetness intensity and acidity were calculated from the amounts of added sweetener and sour substance, respectively. The results are listed in Table 13. All the samples had an alcoholic strength of 5 v/v%, a sweetness intensity of 9, an acidity of 0.2 w/v%, a sweetness intensity/acidity of 45, and an energy of 29 kcal/100 mL.

**[Table 13]**

| Table 13: Evaluation based on difference in steviol glycoside | | | | | |
|---|---|---|---|---|---|
| Sample No. | Unit | Si4-1 | Si4-2 | Si4-3 | Si4-4 |
| Neutral spirit | mL/L | 85 | 85 | 85 | 85 |
| Sinapaldehyde | mg/L | 0.1 | 10 | 0.1 | 10 |
| Rebaudioside D | mg/L | 300 | 300 | - | - |
| Rebaudioside M | mg/L | - | - | 300 | 300 |
| Anhydrous citric acid | mg/L | 2200 | 2200 | 2200 | 2200 |
| Residual sweetness | - | 4.0 | 4.6 | 4.0 | 4.6 |
| Astringent aftertaste | - | 4.5 | 4.3 | 4.5 | 4.3 |
| Overall evaluation | - | 4.3 | 4.7 | 4.3 | 4.7 |

| | | | | | |
|---|---|---|---|---|---|
| * In the table, the symbol "-" regarding the amounts of the components added means that the components are not added. | | | | | |

### [Example C] Evaluation of Alcoholic Beverage Containing Syringaldehyde, Sinapaldehyde, and Steviol Glycoside

### Preparation of Sample

Syringaldehyde, sinapaldehyde, a neutral spirit, a sweetener, a sour substance, and water were mixed in blending amounts as listed in Table 14, and the mixture was filled in a can container to prepare a sample liquid. The raw materials used are as follows: Syringaldehyde (Syringaldehyde, available from Tokyo Chemical Industry Co., Ltd.); sinapaldehyde (trans-3,5-dimethoxy-4-hydroxy-cinnamaldehyde, available from Sigma-Aldrich); a neutral spirit (alcoholic strength: 59%); rebaudioside A (RebA): purity of 95.0% or more; and anhydrous citric acid: Jungbunzlauer "Citric Acid Anhydrous". After compounding the raw materials for each sample, carbonic acid gas was injected so that the gas pressure was about 1.6 kgf/cm² at a liquid temperature of 20°C.

### Evaluation of Sample

The samples thus prepared were evaluated for "residual sweetness", "astringent aftertaste", and "overall evaluation" by four trained professional panelists according to the same criteria as in Example A-1. The energy (kcal/100 mL) was calculated on the assumption that the energy derived from rebaudioside A was 0 (kcal/100 mL). The alcoholic strength was calculated from the amount of the neutral spirit added. The sweetness intensity and acidity were calculated from the amounts of added sweetener and sour substance, respectively. The results are listed in Table 14. All the samples had an alcoholic strength of 5 v/v%, a sweetness intensity of 9, an acidity of 0.2 w/v%, a sweetness intensity/acidity ratio of 45, and an energy of 29 kcal/100 mL.

### [Table 14]

**Table 14**

| Sample No. | Unit | M-1 | M-2 | M-3 | M-4 |
|---|---|---|---|---|---|
| Neutral spirit | mL/L | 85 | 85 | 85 | 85 |
| Syringaldehyde | mg/L | 0.01 | 0.1 | 1 | 10 |
| Sinapaldehyde | mg/L | 0.01 | 0.1 | 1 | 10 |
| Rebaudioside A | mg/L | 300 | 300 | 300 | 300 |
| Anhydrous citric acid | mg/L | 2200 | 2200 | 2200 | 2200 |
| Residual sweetness | - | 3.9 | 3.9 | 4.1 | 4.6 |
| Astringent aftertaste | - | 4.5 | 4.5 | 4.4 | 4.4 |
| Overall evaluation | - | 4.3 | 4.2 | 4.4 | 4.6 |

## Claims

1. A beverage comprising:
a steviol glycoside; and
syringaldehyde, sinapaldehyde, or a combination thereof,
wherein a content of the syringaldehyde, sinapaldehyde, or combination thereof is from 0.001 mg/L to 100 mg/L.

2. The beverage according to claim 1, wherein
the steviol glycoside includes one or more steviol glycosides selected from the group consisting of stevioside, rebaudioside A, rebaudioside B, rebaudioside C, rebaudioside D, rebaudioside F, rebaudioside M, dulcoside A, rubusoside, and steviolbioside, and
a content of the one or more steviol glycosides is 5 mg/L or more relative to the beverage.

3. The beverage according to claim 1 or 2, wherein the content of the syringaldehyde is from 0.007 mg/L to 100 mg/L.

4. The beverage according to any one of claims 1 to 3, wherein the content of the sinapaldehyde is from 0.007 mg/L to 100 mg/L.

5. The beverage according to any one of claims 2 to 4, wherein the content of the one or more steviol glycosides is from 0.5 to 150000 times the content of the syringaldehyde, sinapaldehyde, or combination thereof in weight ratio.

6. The beverage according to any one of claims 2 to 5, wherein the one or more steviol glycosides include one or more selected from the group consisting of rebaudioside A, rebaudioside D, and rebaudioside M.

7. The beverage according to any one of claims 1 to 6, wherein the beverage has an alcoholic strength of from 0.5 to 40 v/v%.

8. The beverage according to any one of claims 1 to 7, wherein the beverage is a sparkling beverage.

9. The beverage according to any one of claims 1 to 8, wherein the beverage has a pH of from 2.0 to 4.6.

10. The beverage according to any one of claims 1 to 9, wherein the beverage has a sweetness intensity of from 0.1 to 20.

11. The beverage according to any one of claims 1 to 10, further comprising a sour substance, wherein the beverage has an acidity of from 0.01 to 5.0 w/v%.

12. The beverage according to any one of claims 1 to 11, wherein the beverage has a sweetness intensity/acidity ratio of from 1 to 700.

13. The beverage according to any one of claims 1 to 12, further comprising a low-intensity sweetener or a high-intensity sweetener other than the steviol glycoside.

14. The beverage according to any one of claims 1 to 13, comprising a brown spirit.

15. The beverage according to any one of claims 1 to 14, wherein the beverage has an energy of 100 kcal/100 mL or less.

16. The beverage according to any one of claims 1 to 15, wherein the beverage is a citrus fruit-flavored, pome fruit-flavored, stone fruit-flavored, berry-flavored, nut-flavored, tropical and subtropical fruit-flavored, fruity vegetable-flavored, root vegetable-flavored, leaf and stem vegetable-flavored, fruit vegetable-flavored, savory herb and garnish-flavored, energy drink-flavored, coffee-flavored, tea-flavored, cocoa-flavored, cola-flavored, dessert-flavored, or lactic drink-flavored beverage.

17. The beverage according to any one of claims 1 to 16, wherein the beverage is a packaged beverage.

18. A 1.2 to 10-fold concentrate for providing the beverage according to any one of claims 1 to 17.
